# EUROPEAN PATENT APPLICATION

(11) **EP 4 190 443 A1**
(43) Date of publication of application: **07.06.2023**
(21) Application number: 21849094.4
(22) Date of filing: 12.07.2021
(51) Int. Cl.: B01J 23/00, B01J 37/16, B01J 37/08, B01J 23/755, B01J 23/745, H01M 8/0637, H01M 8/124

(54) **DRY REFORMING CATALYST COMPRISING PEROVSKITE STRUCTURE MATERIAL HAVING ELUTED TRANSITION ELEMENT, METHOD FOR MANUFACTURING SAME, DRY REFORMING CATALYST SYSTEM COMPRISING SAME, AND SOLID OXIDE FUEL CELL COMPRISING SAME**

(30) Priority: 30.07.2020 KR 20200094908; 25.05.2021 KR 20210066596
(71) Applicant: DRM Catalyst Inc., Ulsan 44919 (KR)
(72) Inventor: KIM, Gun Tae, Ulju-gun, Ulsan 44919 (KR); OH, Jin Kyung, Ulju-gun, Ulsan 44919 (KR); JOO, Sang Wook, Ulju-gun, Ulsan 44919 (KR)
(74) Representative: Ostertag & Partner Patentanwälte mbB
(86) International application number: PCT/KR2021/008859
(87) International publication number: WO 2022/025479

(57) **Abstract**

Proposed is a dry reforming catalyst body composed of a perovskite crystal structure material having eluted transition elements with excellent catalytic stability. The dry reforming catalyst body includes a matrix composed of a perovskite crystal structure material comprising a first transition element and a second transition element and an eluate in which the first transition element is eluted from the matrix to the surface. The present invention provides a dry reforming catalyst including a perovskite structure material having an eluted transition element with excellent catalyst stability. The dry reforming catalyst according to one embodiment of the present invention includes a matrix comprising a perovskite structure material comprising a first transition element and a second transition element and an eluate which is the first transition element eluted from the matrix to the surface.

## Description

### Technical Field

The technical idea of the present invention relates to carbon reforming. More particularly, the present invention relates to a dry reforming catalyst body composed of a perovskite crystal structure material having an eluted transition element, a method for manufacturing the same, a dry reforming catalyst system including the same, and a solid oxide fuel cell including the same.

### Background Art

There is an increasing interest in technology that reduces carbon dioxide gas generation, which is the main cause of global warming. Methods to reduce carbon dioxide gas generation include physical or chemical methods, and dry reforming is a representative chemical method that reacts carbon dioxide (CO₂) gas with methane (CH₄) gas to generate syngas such as CO and H₂, which can be used as an energy source. This dry reforming is very meaningful as a mixed gas treatment technology, considering a large amount of greenhouse gases such as carbon dioxide gas and methane gas contained in biogas such as landfill gas, and at the same time, dry reforming is also meaningful as energy storage in that the dry reforming can convert carbon dioxide gas into a useful state as an energy source. For example, syngas formed by dry reforming can be useful as fuel for high-temperature fuel cells such as solid oxide fuel cells (SOFCs). Unlike the already commercialized wet reforming method, dry reforming does not require water, and the ratio of H₂/CO in the formed syngas is close to 1, which is advantageous for the production of the synthetic gas and can remove carbon dioxide and methane gas, which are the main components of greenhouse gas.

However, a metal agglomeration phenomenon in which a metal catalyst such as nickel used in the dry reforming escapes from the matrix and agglomerates or a sintering phenomenon and a carbon coking phenomenon in which carbon is deposited occurs, and the catalyst activity is degraded according to use, so there is a limit to commercialization. In particular, application at low temperatures is difficult due to carbon deposition.

### Disclosure

### Technical Problem

The technical problem to be achieved by the technical concept of the present invention is to provide a dry reforming catalyst body composed of a perovskite crystal structure material having an eluted transition element with excellent catalytic stability and a manufacturing method thereof.

A technical problem to be achieved by the technical concept of the present invention is to provide a dry reforming catalyst system including the dry reforming catalyst body.

A technical problem to be achieved by the technical concept of the present invention is to provide a solid oxide fuel cell including the dry reforming catalyst body.

However, these tasks are exemplary, and the technical concept of the present invention is not limited thereto.

### Technical Solution

A dry reforming catalyst body according to the technical concept of the present invention for achieving the above technical problem includes: a matrix composed of a perovskite crystal structure material comprising a first transition element and a second transition element; and an eluate in which the first transition element is eluted from the matrix to the surface.

In one embodiment of the present invention, the second transition element may suppress the elution of the first transition element, thereby reducing the size of the eluate.

In one embodiment of the present invention, the eluate may have a size in a range of 5 to 10 nm.

In one embodiment of the present invention, the first transition element and the second transition element may contain cobalt (Co), nickel (Ni), iron (Fe), copper (Cu), manganese (Mn), ruthenium (Ru), rhodium (Rh), palladium (Pd), iridium (Ir), platinum (Pt), gold (Au), silver (Ag), or a mixture thereof.

In one example of the present invention, the perovskite crystal structure material may include a compound represented by Formula 1 below.

<Formula 1> RₐE_{b}T'ₓT₁₋ₓO_{3-δ}

In Formula 1, R may include one or more elements selected from the lanthanide group, E may include one or more elements selected from the alkaline earth metal group, and T and T' are different elements selected from a transition element, which are the first transition element and the second transition element, O is oxygen, and each of a and b is each a numerical value greater than 0 and less than 1 and satisfying a + b = 1, the x is a numerical value greater than 0 and less than 1, and the δ is 0 or a positive numerical value that is equal to or less than 1 and is a value that makes the compound of Formula 1 electrically neutral.

In one example of the present invention, the perovskite crystal structure material may include a compound represented by Formula 2 below.

<Formula 2> RₐE_{b}FeₓT₁₋ₓO_{3-δ}

In Formula 2, R may include one or more elements selected from the lanthanide group, E may include one or more elements selected from the alkaline earth metal group, and T is the first transition element selected from a transition element excluding iron (Fe), and Fe is the second transition element, O is oxygen, and each of a and b is each a numerical value greater than 0 and less than 1 and satisfying a + b = 1, the x is a numerical value greater than 0 and less than 1, and the δ is 0 or a positive numerical value that is equal to or less than 1 and is a value that makes the compound of Formula 2 electrically neutral.

In one example of the present invention, the perovskite crystal structure material may include a compound represented by Formula 3 below.

<Formula 3> LaₐCa_{b}FeₓT₁₋ₓO_{3-δ}

In Formula 3, T is the first transition element selected from a transition element excluding iron (Fe), and Fe is the second transition element, O is oxygen, and each of a and b is each a numerical value greater than 0 and less than 1 and satisfying a + b = 1, the x is a numerical value greater than 0 and less than 1, and the δ is 0 or a positive numerical value that is equal to or less than 1 and is a value that makes the compound of Formula 3 electrically neutral. T may include cobalt (Co), nickel (Ni), copper (Cu), manganese (Mn), ruthenium (Ru), rhodium (Rh), palladium (Pd), iridium (Ir), platinum (Pt), gold (Au), silver (Ag), or a mixture thereof.

In one example of the present invention, the perovskite crystal structure material may include a compound represented by Formula 4 below.

<Formula 4> LaₐCa_{b}FeₓNi₁₋ₓO_{3-δ}

In Formula 4, O is oxygen, each of a and b is each a numerical value greater than 0 and less than 1 and satisfying a + b = 1, Fe is the second transition element, Ni is the first transition element, the x is a numerical value greater than 0 and less than 1, and the δ is 0 or a positive numerical value that is equal to or less than 1 and is a value that makes the compound of Formula 4 electrically neutral.

In one example of the present invention, the perovskite crystal structure material may include a compound represented by Formula 5 below.

<Formula 5> La_{0.9}Ca_{o.1}Fe_{0.5}T_{0.5}O₃₋δ

In Formula 5, T is the first transition element selected from a transition element excluding iron (Fe), and Fe is the second transition element, O is oxygen, and the δ is 0 or a positive numerical value that is equal to or less than 1 and is a value that makes the compound of Formula 5 electrically neutral. T may include cobalt (Co), nickel (Ni), copper (Cu), manganese (Mn), ruthenium (Ru), rhodium (Rh), palladium (Pd), iridium (Ir), platinum (Pt), gold (Au), silver (Ag), or a mixture thereof.

In one embodiment of the present invention, the perovskite crystal structure material constituting the dry reforming catalyst body may include La_{0.9}Ca_{0.1}Fe_{0.5}Co_{0.5}0_{3-δ}, La_{0.9}Ca_{0.1}Fe_{0.5}Ni_{0.5}O₃-_{δ}, La_{0.9}Ca_{0.1}Fe_{0.5}Cu_{0.5}O_{3-δ}, La_{0.9}Ca_{0.1}Fe_{0.5}Mn_{0.5}O_{3-δ}, La_{0.9}Ca_{0.1}Fe_{0.5}Ru_{0.5}O_{3-δ}, La_{0.9}Ca_{0.1}Fe_{0.5}Rh_{0.5}O_{3-δ}, La_{0.9}Ca_{0.1}Fe_{0.5}Pd_{0.5}O_{3-δ}, La_{0.9}Ca_{0.1}Fe_{0.5}Ir_{0.5}O_{3-δ}, La_{0.9}Ca_{0.1}Fe_{0.5}Pt_{0.5}O_{3-δ}, La_{0.9}Ca_{0.1}Fe_{0.5}Au_{0.5}O_{3-δ}, La_{0.9}Ca_{0.1}Fe_{0.5}Ag_{0.5}O_{3-δ}, or a mixture thereof.

In one example of the present invention, the perovskite crystal structure material may include a compound represented by Formula 6 below.

<Formula 6> La_{0.9}Ca_{0.1}FeₓNi₁₋ₓO_{3-δ}

In Formula 6, O is oxygen, Fe is the second transition element, Ni is the first transition element, the x is a numerical value in a range of from greater than 0.3 to 0.7, and the δ is 0 or a positive numerical value that is equal to or less than 1 and is a value that makes the compound of Formula 6 electrically neutral.

In one embodiment of the present invention, the perovskite crystal structure material constituting the dry reforming catalyst body may include La_{0.9}Ca_{0.1}Fe_{0.5}Co_{0.5}0_{3-δ}, La_{0.9}Ca_{0.1}Fe_{0.5}Ni_{0.5}O₃-_{δ}, La_{0.9}Ca_{0.1}Fe_{0.5}Cu_{0.5}O_{3-δ}, La_{0.9}Ca_{0.1}Fe_{0.5}Mn_{0.5}O_{3-δ}, La_{0.9}Ca_{0.1}Fe_{0.5}Ru_{0.5}O_{3-δ}, La_{0.9}Ca_{0.1}Fe_{0.5}Rh_{0.5}O_{3-δ}, La_{0.9}Ca_{0.1}Fe_{0.5}Pd_{0.5}O_{3-δ}, La_{0.9}Ca_{0.1}Fe_{0.5}Ir_{0.5}O_{3-δ}, La_{0.9}Ca_{0.1}Fe_{0.5}Pt_{0.5}O_{3-δ}, La_{0.9}Ca_{0.1}Fe_{0.5}Au_{0.5}O_{3-δ}, La_{0.9}Ca_{0.1}Fe_{0.5}Ag_{0.5}O_{3-δ}, or a mixture thereof.

In one embodiment of the present invention, the perovskite crystal structure material may be La_{0.9}Ca_{0.1}Fe_{0.5}Ni_{0.5}O_{3-δ}, the first transition element is nickel (Ni), and the second transition element is iron (Fe), the eluate may include nickel, and the iron suppresses the elution of the nickel, thereby reducing the size of the eluate, so that the eluate comprising nickel may have a size in a range of 5 to 10 nm.

A dry reforming catalyst body according to the technical concept of the present invention for achieving the above technical problem includes a matrix composed of a perovskite crystal structure material including a first transition element, a second transition element, and a third transition element; and an eluate in which the first transition element, the third transition element, or both of them are eluted from an inside to a surface of the matrix. The perovskite crystal structure material includes a compound represented by Formula 7 below.

<Formula 7> RₐE_{b}T'ₓT_{1-(x+y)}T"_{y}O_{3-δ}

In Formula 1, R may include one or more elements selected from the lanthanide group, E may include one or more elements selected from the alkaline earth metal group, T, T', and T" are different elements selected from transition elements, respectively the first transition element, the second transition element, and the third transition element, O is oxygen, O is oxygen, and each of a and b is each a numerical value greater than 0 and less than 1 and satisfying a + b = 1, the x and the y are numerical values greater than 0 and less than 1 and satisfying x + y = 1, and the δ is 0 or a positive numerical value that is equal to or less than 1 and is a value that makes the compound of Formula 7 electrically neutral.

A method for manufacturing a dry reforming catalyst body according to the technical concept of the present invention for achieving the above technical problem includes: forming a matrix composed of a perovskite crystal structure material comprising a first transition element and a second transition element; and heat-treating the matrix in a reducing gas atmosphere to form an eluate in which the first transition element is eluted from the matrix to the surface, in which the size of the eluate may be controlled by a temperature range in which the heat treatment is performed.

In one example of the present invention, the perovskite crystal structure material may include a compound represented by Formula 6 below.

<Formula 6> La_{0.9}Ca_{0.1}FeₓNi₁₋ₓO_{3-δ}

In Formula 6, O is oxygen, Fe is the second transition element, Ni is the first transition element, the x is a numerical value in a range of from greater than 0.3 to 0.7, and the δ is 0 or a positive numerical value that is equal to or less than 1 and is a value that makes the compound of Formula 6 electrically neutral.

In one embodiment of the present invention, the forming of the eluate may be performed at a temperature in a range of 700°C to 750°C.

In one embodiment of the present invention, the reducing gas may include at least one of hydrogen gas, ammonia gas, carbon monoxide gas, methane gas, and propane gas.

In one embodiment of the present invention, the forming of the matrix may include: mixing the metal precursors measured to fit the composition of the perovskite crystal structure material with the solvent; forming a solid from the mixture by a spontaneous combustion process; calcining the solid in the air to form a calcined product; and forming the matrix by pulverizing the calcined product.

A dry reforming catalyst system according to the technical concept of the present invention for achieving the above technical problem includes a dry reforming catalyst body for reforming a gas to be reformed, in which the dry reforming catalyst body includes: a matrix composed of a perovskite crystal structure material comprising a first transition element and a second transition element; and an eluate in which the first transition element is eluted from the matrix to the surface, and the perovskite crystal structure material includes the compound of Formula 1.

A dry reforming catalyst system, according to the technical concept of the present invention for achieving the above technical problem, includes: a gas supply unit supplying a gas to be reformed; and a gas reforming reaction unit for reforming the target gas to be reformed supplied from the gas supply unit, in which the gas reforming reaction unit may include a dry reforming catalyst body that reforms the target gas to be reformed, in which the dry reforming catalyst body includes: a matrix composed of a perovskite crystal structure material comprising a first transition element and a second transition element; and an eluate in which the first transition element is eluted from the matrix to the surface.

In one embodiment of the present invention, the gas supply unit may include: a gas accommodating unit accommodating a gas to be reformed; and a gas mass flow control unit controlling a mass flow of the target gas to be reformed.

In one embodiment of the present invention, the gas accommodating unit may accommodate a carrier gas, a reducing gas, or all of them, and the gas mass flow control unit may control the carrier gas, the reducing gas, or both of them, respectively.

In one embodiment of the present invention, the dry forming catalyst system further includes: a bubbler disposed between the gas supply unit and the gas reforming reaction unit; and an input 3-way valve and an output 3-way valve to control gas flow to the bubbler.

In one embodiment of the present invention, the dry forming catalyst system further includes a pressure measuring unit disposed between the gas supply unit and the gas reforming reaction unit and measuring a gas pressure provided to the gas reforming reaction unit.

In one embodiment of the present invention, the dry forming catalyst system further includes a water vapor condensing unit disposed in an output unit of the gas reforming reaction unit and condensing and removing water vapor formed from the gas to be reformed.

In one embodiment of the present invention, the gas reforming reaction unit may include a plurality of gas reforming reaction units, and each of the gas reforming reaction units may include one or more valves for opening or blocking a gas flow path of the target gas to be reformed.

In one embodiment of the present invention, the gas reforming reaction unit includes a first to third gas reforming reaction units, the gas reforming reaction unit may include: a first valve disposed in a gas path toward the first gas reforming reaction unit and opening or blocking a gas flow path to the first gas reforming reaction unit; second to fourth valves disposed between the first gas reforming reaction unit and the second gas reforming reaction unit and opening or blocking a gas flow path to the second gas reforming reaction unit; fifth to seventh valves disposed between the second gas reforming reaction unit and the third gas reforming reaction unit opening or blocking a gas flow path to the third gas reforming reaction unit; and an eighth valve disposed in a gas flow path discharged from the third gas reforming reaction unit.

In one embodiment of the present invention, the first valve may be a 3-way valve, the second valve may be a 4-way valve, the third valve may be a 2-way valve, the fourth valve may be a 4-way valve, the fifth valve may be a 4-way valve, the sixth valve may be a 2-way valve, the seventh valve may be a 3-way valve, and the eighth valve may be a 3-way valve.

A solid oxide fuel cell according to the technical concept of the present invention for achieving the above technical problem, the solid oxide fuel cell includes: an anode; a cathode disposed facing the anode; and an electrolyte disposed between the anode and the cathode, in which the anode includes a dry reforming catalyst body including: a matrix composed of a perovskite crystal structure material comprising a first transition element and a second transition element; and an eluate in which the first transition element is eluted from the matrix to the surface.

### Advantageous Effects

The dry reforming catalyst body, according to the technical concept of the present invention, forms an eluate having a size in the range of 5 to 10 nm, in which the transition elements are eluted from a matrix composed of a perovskite crystal structure material so that an eluate having catalytic activity, for example, a nickel metal, can be attached to the matrix for a longer time, hence increasing catalyst continuity.

The above-described effects of the present invention have been illustratively described, and the scope of the present invention is not limited by these effects.

### Description of Drawings

FIG. 1 is a schematic view showing a dry reforming catalyst body according to an embodiment of the present invention;
FIG. 2 is a schematic diagram showing the structure of a perovskite crystal structure material for explaining the elution of transition elements in a dry reforming catalyst body according to an embodiment of the present invention;
FIG. 3 is a schematic view showing a double layer perovskite crystal structure material as a perovskite crystal structure material constituting a dry reforming catalyst according to an embodiment of the present invention;
FIG. 4 is a flowchart schematically showing a method of manufacturing a dry reforming catalyst according to an embodiment of the present invention;
FIG. 5 is a flowchart schematically showing the step of forming the matrix in the method of manufacturing the dry reforming catalyst body of FIG. 4 according to an embodiment of the present invention;
FIG. 6 is a graph showing an X-ray diffraction pattern of a dry reforming catalyst according to an embodiment of the present invention;
FIG. 7 are scanning electron microscope photograph of a dry reforming catalyst according to an embodiment of the present invention;
FIG. 8 are graphs showing reforming results of carbon dioxide gas and methane gas over time using a dry reforming catalyst according to an embodiment of the present invention;
FIG. 9 is a graph showing TGA and DSC results of reforming results of carbon dioxide gas and methane gas over time using a dry reforming catalyst according to an embodiment of the present invention;
FIG. 10 is a transmission electron microscope photograph after reforming at 850°C for 1000 hours using a dry reforming catalyst according to an embodiment of the present invention;
FIG. 11 are scanning electron microscope and transmission electron microscope photographs of a perovskite crystal structure material constituting a dry reforming catalyst according to an embodiment of the present invention;
FIG. 12 is a graph showing the result of reforming carbon dioxide gas according to temperature using a dry reforming catalyst according to an embodiment of the present invention;
FIG. 13 is a graph showing results of methane gas reforming according to temperature using a dry reforming catalyst according to an embodiment of the present invention;
FIG. 14 shows the results for the case of LCFN37 in a dry reforming catalyst according to an embodiment of the present invention; FIG. 14 is a schematic diagram showing the system;
FIG. 15 is a schematic diagram showing a dry reforming catalyst system according to an embodiment of the present invention;
FIG. 16 is a schematic diagram showing a dry reforming catalyst system according to an embodiment of the present invention;
FIG. 17 is a diagram explaining the flow of a target gas to be reformed in a plurality of gas reforming reaction units in a dry reforming catalyst system according to an embodiment of the present invention; and
FIG. 18 is a schematic view explaining a solid oxide fuel cell including a dry reforming catalyst according to an embodiment of the present invention.

### Best Mode

Hereinafter, preferred examples of the present invention will be described in detail with reference to the accompanying drawings. Examples of the present invention are presented to make complete the disclosure of the present invention and help those who are ordinarily skilled in the art best understand the invention. The examples described below may, however, be embodied in many different forms, and the scope of the technical idea of the present invention should not be construed as being limited to the examples. Rather, these examples are provided so that this disclosure will be thorough and complete and will fully convey the concept of the invention to those skilled in the art. Like reference numerals throughout this specification mean like elements. Furthermore, various elements and regions in the drawings are schematically illustrated. Accordingly, the technical idea of the present invention is not limited by the relative sizes or spacings illustrated in the accompanying drawings.

The technical concept of the present invention is to provide a dry reforming catalyst composed of a perovskite crystal structure material having an eluted transition element and a manufacturing method thereof. Here, elution means a phenomenon in which materials are constituting the structure of the catalyst body move from the inside to the surface. Specifically, the elution is a phenomenon in which the transition cation at the B position in perovskite (ABO₃) is reduced to metal nanoparticles on the surface of perovskite in an anode atmosphere. The elution of the transition element has been reported in binary alloys such as cobalt-iron (Co-Fe) or cobalt-nickel (Co-Ni).

As an example of the dry reforming reaction, the dry reforming reaction of carbon dioxide gas and methane gas is performed as shown in the following Formula.

<Formula> CH₄ + CO₂ -> 2CO + 2H₂, ΔH⁰₂₉₈ = 247 kJ/mol

In this dry reforming reaction, thermodynamically, the higher the temperature, the higher the conversion rate and the higher the yield of hydrogen or carbon monoxide. However, conventional nickel-based anodes, for example, may be deactivated due to aggregation and may cause carbon deposition at high temperatures.

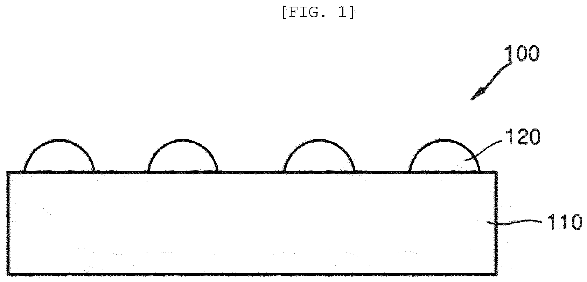

FIG. 1 is a schematic view showing a dry reforming catalyst body 100 according to an embodiment of the present invention.

Referring to FIG. 1, the dry reforming catalyst body 100 includes a matrix 110 composed of a perovskite crystal structure material comprising a first transition element and a second transition element; and an eluate 120 in which the first transition element is eluted from the matrix to the surface.

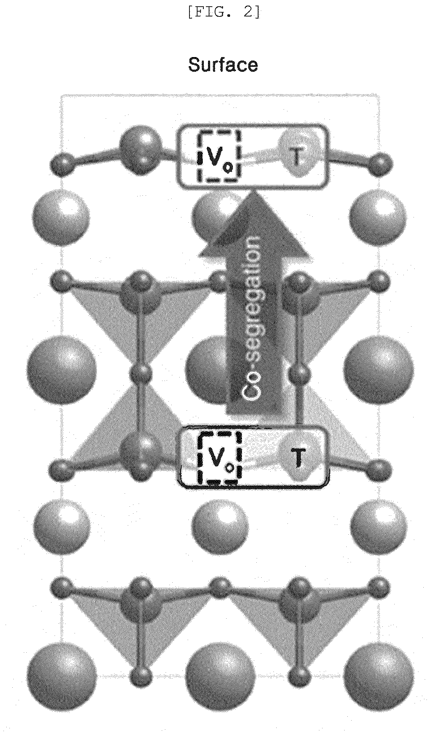

FIG. 2 is a schematic diagram showing the structure of a perovskite crystal structure material for explaining the elution of transition elements in a dry reforming catalyst body 100 according to an embodiment of the present invention.

Referring to FIG. 2, in the perovskite crystal structure material, "Vo" represents an oxygen vacancy, and "T" represents a transition element forming the eluate to be eluted. When single-layer perovskite La_{0.9}Ca_{0.1}Fe_{0.5}-Ni_{0.5}O_{3-δ} is sintered in an air atmosphere and then subjected to reduction heat treatment in a hydrogen atmosphere, nano-sized nickel (Ni) particles are simultaneously eluted to the surface along with oxygen vacancies. By heat treatment, the oxygen vacancies and the transition elements are cavity separated and moved to the surface. The energy required for this movement is referred to as cavity separation energy, and the higher the cavity separation energy, the more difficult the cavity separation is. For example, regarding the cavity separation energy, the absolute value of the cavity separation energy of nickel (Ni), cobalt (Co), and manganese (Mn) is greater than the absolute value of the cavity separation energy of iron (Fe). Therefore, iron (Fe) is relatively difficult to cavity separate (i.e., elution), and nickel (Ni), cobalt (Co), and manganese (Mn) are easy to cavity separate. The transition element may include a transition metal.

Hereinafter, the perovskite crystal structure material will be described in detail.

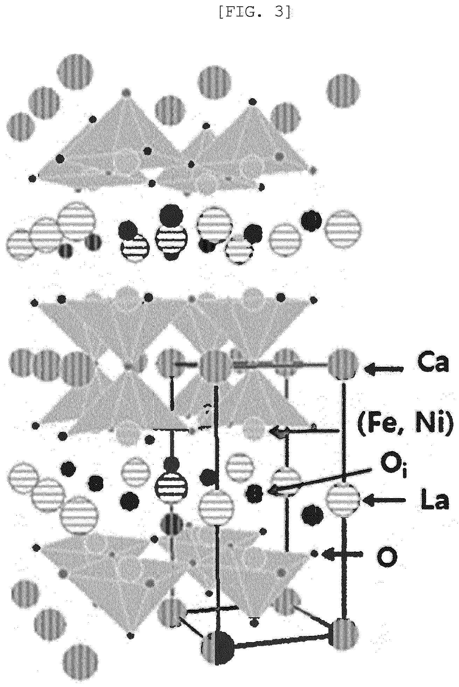

FIG. 3 is a schematic diagram showing a double layer perovskite crystal structure material as a perovskite crystal structure material constituting the dry reforming catalyst body 100 according to an embodiment of the present invention.

Referring to FIG. 3, a double layer perovskite crystal structure material is shown. Perovskite crystal structure materials can be largely divided into simple perovskite crystal structure materials and double perovskite crystal structure materials.

A simple perovskite crystal structure material may have a chemical formula of ABO₃. The simple perovskite crystal structure may include elements having a relatively large ionic radius at an A-site which is a corner position of a cubic lattice and may have a coordination number (CN) of 12 by oxygen ions. For example, rare earth elements, alkaline rare earth elements, and alkaline elements may be positioned at the A-site. Elements having relatively small ionic radii may be positioned at the B-site, which is the body center position of the cubic lattice, and may have a coordination number of 6 by oxygen ions. For example, transition elements such as cobalt (Co), iron (Fe), and nickel (Ni) may be positioned at the B-site. Oxygen ions may be positioned at each face center of the cubic lattice. Such a simple perovskite structure can generally cause structural displacement when another material is substituted at the A-site, and structural variation can occur in the octahedron of BO₆ consisting of the six closest oxygen ions mainly around elements positioned at the B-site.

The double perovskite crystal structure material shown in FIG. 3 has a crystal lattice structure in which two or more elements are regularly arranged at the A-site and has a compound, for example, represented by Formula of AA'B₂O_{5+δ}. Specifically, the lanthanide compound having a double perovskite crystal structure may basically repeat the stacking sequence of [BO₂]-[AO] - [BO₂] - [A'O] along the c-axis. For example, the B may be iron (Fe) or nickel (Ni), the A may be a lanthanide group including lanthanum (La), and the A' may be calcium (Ca).

Reduction in a hydrogen atmosphere changes from a simple perovskite crystal structure material to a double perovskite crystal structure material. When this double perovskite crystal structure is formed, the movement of oxygen ions can be accelerated and thermal, and chemical stability can be improved.

Referring to FIG. 1, the dry reforming catalyst body 100 includes a matrix 110 and an eluate 120.

The matrix 110 may contain a first transition element and a second transition element that are different from each other. The matrix 110 may have various shapes.

Eluate 120 may have a size in a range of 5 to 10 nm. The eluate 120 may have various shapes, such as, for example, a semispherical shape.

The second transition element contained in the matrix 110 may suppress the elution of the first transition element from the matrix 110, thereby reducing the size of the eluate 120.

The first transition element and the second transition element may contain cobalt (Co), nickel (Ni), copper (Cu), manganese (Mn), ruthenium (Ru), rhodium (Rh), palladium (Pd), iridium (Ir), platinum (Pt), gold (Au), silver (Ag), or a mixture thereof.

For example, in the dry reforming catalyst body 100, the perovskite crystal structure material may be La_{0.9}Ca_{0.1}Fe_{0.5}Ni_{0.5}O₃-_{δ}, the first transition element mat be nickel (Ni), and the second transition element may be iron (Fe), the eluate may contain nickel, and the iron suppresses the elution of the nickel, thereby reducing the size of the eluate 120, so that the eluate comprising nickel may have a size in a range of 5 to 10 nm.

The perovskite crystal structure material may include a simple perovskite crystal structure material or a double perovskite crystal structure material.

The perovskite crystal structure material constituting the dry reforming catalyst body 100, according to an embodiment of the present invention, may include a compound represented by Formula 1 below.

<Formula 1> RₐE_{b}T'ₓT₁₋ₓO_{3-δ}

In Formula 1, R may include one or more elements selected from the lanthanide group, E may include one or more elements selected from the alkaline earth metal group, and T and T' are different elements selected from a transition element, which are the first transition element and the second transition element, O is oxygen, and each of a and b is each a numerical value greater than 0 and less than 1 and satisfying a + b = 1, x is a numerical value greater than 0 and less than 1, and δ is 0 or a positive numerical value that is equal to or less than 1 and is a value that makes the compound of Formula 1 electrically neutral.

The R may include one or more elements selected from the lanthanide group, for example, lanthanum (La), neodymium (Nd), praseodymium (Pr), samarium (Sm), gadolinium (Gd), europium (Eu), terbium (Tb), erbium (Er), or a mixture thereof.

The E may include one or more elements selected from the alkaline earth metal group, for example, beryllium (Be), magnesium (Mg), calcium (Ca), strontium (Sr), barium (Ba), or a mixture thereof.

The T and T' are different elements selected from transition elements, and each of the T and T' may include cobalt (Co), nickel (Ni), iron (Fe), copper (Cu), manganese (Mn), ruthenium (Ru), rhodium (Rh), palladium (Pd), iridium (Ir), platinum (Pt), gold (Au), silver (Ag), or a mixture thereof.

The O is oxygen. The δ is 0 or a positive numerical value that is equal to or less than 1 and is a value that makes the compound of Formula 1 electrically neutral. The δ represents interstitial oxygen in the perovskite structure, and the value of δ may be determined according to a specific crystal structure.

The perovskite crystal structure material constituting the dry reforming catalyst body 100, according to an embodiment of the present invention, may include a compound represented by Formula 2 below.

<Formula 2> RₐE_{b}FeₓT₁₋ₓO_{3-δ}

In Formula 2, R may include one or more elements selected from the lanthanide group, E may include one or more elements selected from the alkaline earth metal group, and T is the first transition element selected from a transition element excluding iron (Fe), and Fe is the second transition element, O is oxygen, and each of a and b is each a numerical value greater than 0 and less than 1 and satisfying a + b = 1, x is a numerical value greater than 0 and less than 1, and δ is 0 or a positive numerical value that is equal to or less than 1 and is a value that makes the compound of Formula 1 electrically neutral.

The R may include one or more elements selected from the lanthanide group, for example, lanthanum (La), neodymium (Nd), praseodymium (Pr), samarium (Sm), gadolinium (Gd), europium (Eu), terbium (Tb), erbium (Er), or a mixture thereof.

The E may include one or more elements selected from the alkaline earth metal group, for example, beryllium (Be), magnesium (Mg), calcium (Ca), strontium (Sr), barium (Ba), or a mixture thereof.

T may include cobalt (Co), nickel (Ni), iron (Fe), copper (Cu), manganese (Mn), ruthenium (Ru), rhodium (Rh), palladium (Pd), iridium (Ir), platinum (Pt), gold (Au), silver (Ag), or a mixture thereof.

The perovskite crystal structure material constituting the dry reforming catalyst body 100, according to an embodiment of the present invention, may include a compound represented by Formula 3 below.

<Formula 3> LaₐCa_{b}FeₓT₁₋ₓO_{3-δ}

In Formula 3, T is the first transition element selected from a transition element excluding iron (Fe), and Fe is the second transition element, O is oxygen, and each of a and b is each a numerical value greater than 0 and less than 1 and satisfying a + b = 1, x is a numerical value greater than 0 and less than 1, and δ is 0 or a positive numerical value that is equal to or less than 1 and is a value that makes the compound of Formula 1 electrically neutral.

T may include cobalt (Co), nickel (Ni), copper (Cu), manganese (Mn), ruthenium (Ru), rhodium (Rh), palladium (Pd), iridium (Ir), platinum (Pt), gold (Au), silver (Ag), or a mixture thereof.

The perovskite crystal structure material constituting the dry reforming catalyst body 100, according to an embodiment of the present invention, may include a compound represented by Formula 4 below.

<Formula 4> LaₐCa_{b}FeₓNi₁₋ₓO_{3-δ}

In Formula 4, O is oxygen, each of a and b is each a numerical value greater than 0 and less than 1 and satisfying a + b = 1, Fe is the second transition element, Ni is the first transition element, x is a numerical value greater than 0 and less than 1, and δ is 0 or a positive numerical value that is equal to or less than 1 and is a value that makes the compound of Formula 4 electrically neutral.

The perovskite crystal structure material constituting the dry reforming catalyst body 100, according to an embodiment of the present invention, may include a compound represented by Formula 5 below.

<Formula 5> La_{0.9}Ca_{0.1}Fe_{0.5}T_{0.5}O_{3-δ}

In Formula 5, T is the first transition element selected from a transition element excluding iron (Fe), and Fe is the second transition element, O is oxygen, and δ is 0 or a positive numerical value that is equal to or less than 1 and is a value that makes the compound of Formula 5 electrically neutral.

T may include cobalt (Co), nickel (Ni), copper (Cu), manganese (Mn), ruthenium (Ru), rhodium (Rh), palladium (Pd), iridium (Ir), platinum (Pt), gold (Au), silver (Ag), or a mixture thereof.

The perovskite crystal structure material constituting the dry reforming catalyst body, according to an embodiment of the present invention, may include La_{0.9}Ca_{0.1}Fe_{0.5}Co_{0.5}O_{3-δ}, La_{0.9}Ca_{0.1}Fe_{0.5}Ni_{0.5}O_{3-δ}, La_{0.9}Ca_{0.1}Fe_{0.5}Cu_{0.5}O_{3-δ}, La_{0.9}Ca_{0.1}Fe_{0.5}Mn_{0.5}O_{3-δ}, La_{0.9}Ca_{0.1}Fe_{0.5}Ru_{0.5}O_{3-δ}, La_{0.9}Ca_{0.1}Fe_{0.5}Rh_{0.5}O_{3-δ}, La_{0.9}Ca_{0.1}Fe_{0.5}Pd_{0.5}O_{3-δ}, La_{0.9}Ca_{0.1}Fe_{0.5}Ir_{0.5}O_{3-δ}, La_{0.9}Ca_{0.1}Fe_{0.5}Pt_{0.5}O_{3-δ}, La_{0.9}Ca_{0.1}Fe_{0.5}Au_{0.5}O_{3-δ}, La_{0.9}Ca_{0.1}Fe_{0.5}Ag_{0.5}O_{3-δ}, or a mixture thereof.

The perovskite crystal structure material constituting the dry reforming catalyst body 100, according to an embodiment of the present invention, may include a compound represented by Formula 6 below.

<Formula 6> La_{0.9}Ca_{0.1}FeₓNi₁₋ₓO_{3-δ}

In Formula 6, O is oxygen, Fe is the second transition element, Ni is the first transition element, x is a numerical value in a range of from greater than 0.3 to 0.7, and δ is 0 or a positive numerical value that is equal to or less than 1 and is a value that makes the compound of Formula 6 electrically neutral. Also, preferably, x may be a number of 0.4 or more and 0.7 or less, and more preferably, x may be a number of 0.4 or more and 0.3 or more and less than 0.7.

The perovskite crystal structure material constituting the dry reforming catalyst body, according to an embodiment of the present invention, may include La_{0.9}Ca_{0.1}Fe_{0.5}Co_{0.5}0_{3-δ}, La_{0.9}Ca_{0.1}Fe_{0.5}Ni_{0.5}O_{3-δ}, La_{0.9}Ca_{0.1}Fe_{0.5}Cu_{0.5}O_{3-δ}, La_{0.9}Ca_{0.1}Fe_{0.5}Mn_{0.5}O_{3-δ}, La_{0.9}Ca_{0.1}Fe_{0.5}Ru_{0.5}O_{3-δ}, La_{0.9}Ca_{0.1}Fe_{0.5}Rh_{0.5}O_{3-δ}, La_{0.9}Ca_{0.1}Fe_{0.5}Pd_{0.5}O_{3-δ}, La_{0.9}Ca_{0.1}Fe_{0.5}Ir_{0.5}O_{3-δ}, La_{0.9}Ca_{0.1}Fe_{0.5}Pt_{0.5}O_{3-δ}, La_{0.9}Ca_{0.1}Fe_{0.5}Au_{0.5}O_{3-δ}, La_{0.9}Ca_{0.1}Fe_{0.5}Ag_{0.5}O_{3-δ}, or a mixture thereof.

In the dry reforming catalyst body according to an embodiment of the present invention, the perovskite crystal structure material may be La_{0.9}Ca_{0.1}Fe_{0.5}Ni_{0.5}O_{3-δ}, the first transition element may be nickel (Ni), the second transition element is iron (Fe), the eluate contains nickel, and the iron suppresses the elution of the nickel, thereby reducing the size of the eluent, so that the eluate comprising nickel may have a size in a range of 5 to 10 nm.

Also, in the dry reforming catalyst body, the first transition element may include two or more transition elements. For example, the first transition element and one or more transition elements different from the first transition element may be positioned at positions occupied by the first transition element.

Accordingly, the dry reforming catalyst body according to the technical concept of the present invention includes: a matrix composed of a perovskite crystal structure material comprising first transition elements, second transition elements, and third transition elements; and an eluate in which the first transition element, the third transition element, or both of them are eluted from the matrix to the surface, in which the perovskite crystal structure material may include compounds of the Formula 7.

<Formula 7> RₐE_{b}T'ₓT_{1-(x+y)}T"_{y}O_{3-δ}

In Formula 1, R may include one or more elements selected from the lanthanide group, E may include one or more elements selected from the alkaline earth metal group, and T, T', and T" are different elements selected from transition elements, respectively the first transition element, the second transition element, and the third transition element, O is oxygen, and each of a and b is each a numerical value greater than 0 and less than 1 and satisfying a + b = 1, the x and the y are numbers greater than 0 and less than 1, and δ is 0 or a positive numerical value that is equal to or less than 1 and is a value that makes the compound of Formula 7 electrically neutral.

The R may include one or more elements selected from the lanthanide group, for example, lanthanum (La), neodymium (Nd), praseodymium (Pr), samarium (Sm), gadolinium (Gd), europium (Eu), terbium (Tb), erbium (Er), or a mixture thereof.

The E may include one or more elements selected from the alkaline earth metal group, for example, beryllium (Be), magnesium (Mg), calcium (Ca), strontium (Sr), barium (Ba), or a mixture thereof.

The T, T', and T" are different elements selected from transition elements, and each of the T, T', and T" may include cobalt (Co), nickel (Ni), iron (Fe), copper (Cu), manganese (Mn), ruthenium (Ru), rhodium (Rh), palladium (Pd), iridium (Ir), platinum (Pt), gold (Au), silver (Ag), or a mixture thereof.

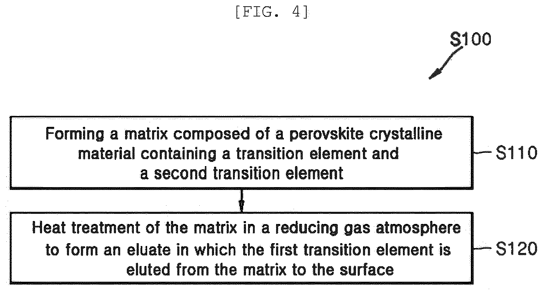

FIG. 4 is a flowchart schematically showing a method of manufacturing a dry reforming catalyst S100 according to an embodiment of the present invention.

Referring to FIG. 4, the dry reforming catalyst manufacturing method S100 includes: forming a matrix composed of a perovskite crystal structure material comprising a first transition element and a second transition element S110; and heat-treating the matrix in a reducing gas atmosphere to form an eluate in which the first transition element is eluted from the matrix to the surface S120.

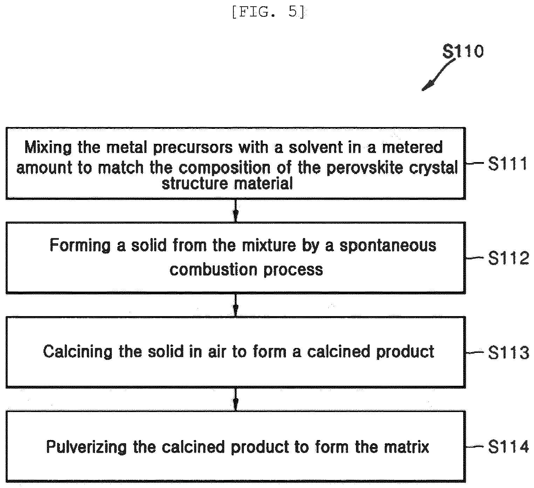

FIG. 5 is a flowchart schematically showing the step of forming the matrix S110 in the method of manufacturing the dry reforming catalyst body of FIG. 4 S100 according to an embodiment of the present invention.

Referring to FIG. 5, the forming of the matrix S110 includes: mixing the metal precursors measured to fit the composition of the perovskite crystal structure material with the solvent Sill; forming a solid from the mixture by a spontaneous combustion process S112; calcining the solid in the air to form a calcined product S113; and forming the matrix by pulverizing the calcined product S114.

The perovskite crystal structure material may include the compounds of Formulae 1 to 7 above. For example, the perovskite crystal structure material may include La_{0.9}Ca_{0.1}Fe_{0.1},Co_{0.5}O_{3-δ}, La_{0.9}Ca_{0.1}Fe_{0.5}Ni_{0.5}O_{3-δ}, La_{0.9}Ca_{0.1}Fe_{0.5}Cu_{0.5}O_{3-δ}, La_{0.9}Ca_{0.1}Fe_{0.5}Mn_{0.5}O_{3-δ}, La_{0.9}Ca_{0.1}Fe_{0.5}Ru_{0.5}O_{3-δ}, La_{0.9}Ca_{0.1}Fe_{0.5}Rh_{0.5}O_{3-δ}, La_{0.9}Ca_{0.1}Fe_{0.5}Pd_{0.5}O_{3-δ}, La_{0.9}Ca_{0.1}Fe_{0.5}Ir_{0.5}O_{3-δ}, La_{0.9}Ca_{0.1}Fe_{0.5}Pt_{0.5}O_{3-δ}, La_{0.9}Ca_{0.1}Fe_{0.5}Au_{0.5}O_{3-δ}, La_{0.9}Ca_{0.1}Fe_{0.5}Ag_{0.5}O_{3-δ}, or a mixture thereof.

In addition, the perovskite crystal structure material may include a compound represented by Formula 6 below.

<Formula 6> La_{0.9}Ca_{0.1}FeₓNi₁₋ₓO_{3-δ}

In Formula 6, O is oxygen, Fe is the second transition element, Ni is the first transition element, x is a numerical value in a range of from greater than 0.3 to 0.7, and δ is 0 or a positive numerical value that is equal to or less than 1 and is a value that makes the compound of Formula 6 electrically neutral. Also, preferably, x may be a number of 0.4 or more and 0.7 or less, and more preferably, x may be a number of 0.4 or more to less than 0.7.

In the step of forming the eluate S120, the size of the eluate may be controlled by a temperature range in which the heat treatment is performed.

The reducing gas atmosphere may include a reducing gas capable of reducing the perovskite crystal structure material. The reducing gas may include, for example, at least one of hydrogen gas, ammonia gas, carbon monoxide gas, methane gas, and propane gas.

The heat treatment may be performed at a temperature ranging from about 700°C to about 750°C, for example. The heat treatment may be performed under a hydrogen pressure of about 0.1 atm to about 10 atm for, for example, 1 hour to 20 hours. In addition, the reducing gas atmosphere may be composed of 97% of hydrogen gas and 3% of water vapor (H₂O).

The perovskite crystal structure material is La_{0.9}Ca_{0.1}Fe_{0.5}Ni_{0.5}O_{3-δ}, the first transition element is nickel (Ni), the second transition element is iron (Fe), and the eluate may contain nickel. The iron suppresses the elution of nickel, thereby reducing the size of the eluate so that the eluate comprising nickel may have a size in the range of 5 to 10 nm.

Formation of the La₂O₃ may be prevented by the temperature range in which the heat treatment is performed.

Hereinafter, a method for preparing a dry reforming catalyst body according to the technical concept of the present invention will be described in detail.

The method for manufacturing the dry reforming catalyst body includes: mixing metal precursors (e.g., wetting using a solvent) measured to match the composition of the perovskite crystal structure material, that is, the composition of any one of Formulae 1 to 7 above; forming a solid from the mixture; calcining the solid in the air to form a calcined product; and polishing the calcined product.

The metal precursor is mixed in a stoichiometric ratio to obtain the compound of the above Formula. Examples of the metal precursor may include nitrides, oxides, halides, and the like of each component of Formula above, but are not limited thereto. For example, a metal precursor in which the compound forming the dry reforming catalyst body is La_{0.9}Ca_{0.1}Fe_{0.5}Ni_{0.5}O_{3-δ} may be nitrides, oxides, halides, etc., comprising at least one of La, Ca, Fe, and Ni.

In the step of mixing the metal precursor with the solvent, water may be used as the solvent but is not limited thereto. Any solvent capable of dissolving the metal precursor may be used without limitation, for example, lower alcohols with a total carbon number of 5 or less, such as methanol, ethanol, 1-propanol, 2-propanol, butanol; acidic solutions such as nitric acid, hydrochloric acid, sulfuric acid, citric acid; water; organic solvents such as toluene, benzene, acetone, diethyl ether, ethylene glycol, etc., may be used alone or in combination.

The mixing of the metal precursor with the solvent may be performed at a temperature ranging from about 100°C to about 200°C and may be performed for a predetermined time under stirring so that each component is sufficiently mixed. The mixing process, the removal of the solvent, and the addition of necessary additives for this purpose are well known as, for example, the Pechini method and will not be described in detail here.

After the mixing process, an ultrafine solid material may be obtained by a spontaneous combustion process. Subsequently, the ultrafine solid may be heat-treated (calcined, sintered) at a temperature ranging from about 400°C to about 950°C for about 1 hour to about 5 hours, for example, at about 600°C for about 4 hours.

If necessary, a second heat treatment (calcination, sintering) may be performed after the calcining. The second heat treatment process is a process of sintering in air and is performed for about 1 hour to about 24 hours at a temperature in the range of about 950°C to about 1500°C. For example, the second heat treatment process is performed at a temperature in the range of about 950 to about 1500°C for about 12 hours to obtain a powdery result.

Subsequently, the sintered product may be ground or pulverized to obtain a fine powder of a predetermined size. For example, ball milling is performed in acetone for about 24 hours to grind and mix. Next, after putting the mixed powder into a metal mold and pressing, the pressurized pellets may be sintered in the air to prepare a material for a dry reforming catalyst body. Sintering may be performed at a temperature ranging from about 950°C to about 1500°C for about 12 hours to about 24 hours, for example, at a temperature ranging from about 950°C to about 1500°C for about 24 hours, but is not limited thereto. The sintered product may be ground or pulverized to obtain a material for a dry reforming catalyst body in the form of a fine powder having a predetermined size. Accordingly, a perovskite crystal structure material comprising a first transition element and a second transition element may be formed.

Subsequently, the perovskite crystal structure material is heat treated in a reducing atmosphere to elute the first transition element to the surface. The heat treatment may be performed at a temperature ranging from about 700°C to about 750°C, for example. The heat treatment may be performed under a hydrogen pressure of about 3 atm, for example.

### Experimental Example

Hereinafter, the present invention will be described in detail through experimental examples, but this is only a preferred embodiment of the present invention, and the scope of the present invention is not limited by the scope of the description of these experimental examples. Contents not described herein can be technically inferred by those skilled in the art, so the description thereof will be omitted.

By the above method, a matrix composed of La_{0.9}Ca_{0.1}Fe_{0.5}Ni_{0.5}O_{3-δ}, which is a perovskite crystal structure material, was formed. Then, in order to elute nickel (Ni) from the matrix, heat treatment was performed in a range of 675°C to about 850°C in a reducing atmosphere. Accordingly, a dry reforming catalyst body including the matrix and the eluate was formed.

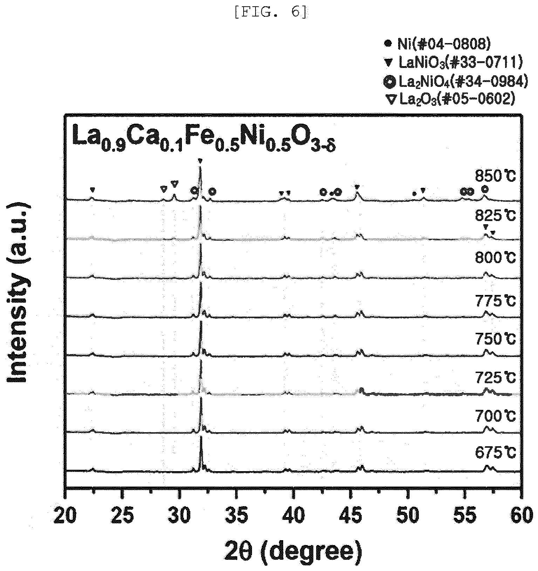

FIG. 6 is a graph showing an X-ray diffraction pattern of a dry reforming catalyst according to an embodiment of the present invention.

Referring to FIG. 6, when the heat treatment temperature in a reducing atmosphere is low, the elution of metal, for example, nickel, does not occur. At 675°C, it is unclear whether nickel is eluted or not because a peak corresponding to nickel overlaps a peak corresponding to the Rp phase (La₂NiO₄). However, at 700°C or higher, a nickel peak due to elution clearly appears. Therefore, in the case of La_{0.9}Ca_{0.1}Fe_{0.5}Ni_{0.5}O_{3-δ}, the lower limit of the heat treatment temperature may be set to 700°C.

On the other hand, La₂O₃ is formed at high temperatures, and La₂O₃ needs to be suppressed for dry reforming. Below 750°C, no peak corresponding to La₂O₃ was found. Therefore, in the case of La_{0.9}Ca_{0.1}Fe_{0.5}Ni_{0.5}O_{3-δ}, the upper limit of the heat treatment temperature may be set to 750°C.

In addition, although carbon deposition decreases as the heat treatment temperature increases, a water resistance problem may occur, so it is necessary to set an appropriate temperature range. In the case of La_{0.9}Ca_{0.1}Fe_{0.5}Ni_{0.5}O_{3-δ}, the range of 700°C to 750°C may be an appropriate temperature range.

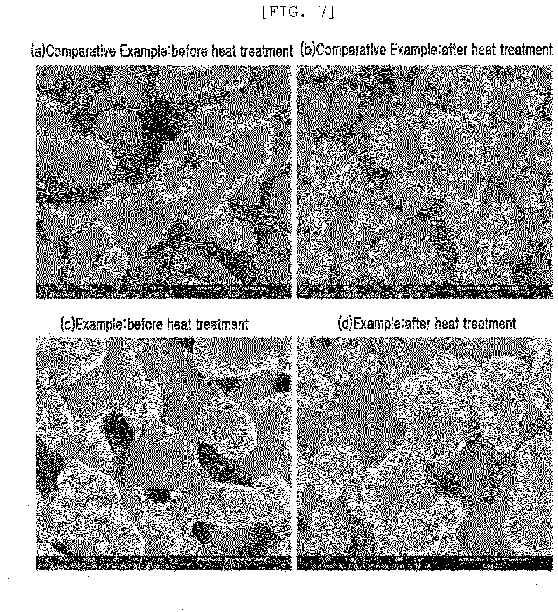

FIG. 7 are scanning electron microscope photographs of a dry reforming catalyst according to an embodiment of the present invention.

Referring to FIG. 7, (a) is a photograph of LCN (La_{0.9}Ca_{0.1}NiO_{3-δ}) as a Comparative Example before reduction heat treatment, (b) is a photograph of LCN (La_{0.9}Ca_{0.1}NiO_{3-δ}) as a Comparative Example after reduction heat treatment, (c) is a photograph of LCFN55 (La_{0.9}Ca_{0.1}Fe_{0.5}Ni_{0.5}O_{3-δ}) as an Example before reduction heat treatment, and (d) is a photograph of LCFN55 (La_{0.9}Ca_{0.1}Fe_{0.5}Ni_{0.5}O_{3-δ}) as an Example after reduction heat treatment. Note that the Comparative Example does not contain iron (Fe) .

Before the reduction heat treatment, both Comparative Examples and Examples had smooth surfaces. According to X-ray diffraction analysis, it can be confirmed that both have a perovskite phase.

After reduction heat treatment, in the case of Comparative Example, when nickel is completely decomposed and eluted from (La_{0.9}Ca_{0.1})₂O₃ or La₂O₃, which is the matrix, to have a rough surface, the nickel protrudes from the entire surface of the matrix and is exposed.

On the other hand, in the case of the Example, the elution of nickel occurs and escapes from the matrix to form an eluate. Compared to normal elution, the eluate is uniformly distributed with a relatively uniform size. The eluate is present in a bumpy form on the surface of the matrix rather than a separate lump. The smaller the size of the eluate, the stronger the eluate may be attached to the matrix. That is, since an eluate having catalytic activity, for example, nickel metal, can be attached to the matrix for a longer time, the durability of the catalyst can be increased. As the eluate is smaller, the agglomeration phenomenon in which the catalytic metal escapes from the matrix and agglomerates together can be suppressed, and thus the catalytic activity can be better maintained.

Conventional LaNiO materials have excellent catalytic activity but low stability, but in the case of the present invention, the iron may be further included to improve catalytic activity and stability. This is because iron generates attraction with nickel so the nickel may be completely separated from the matrix and may be prevented from agglomerating with each other. Accordingly, the size of the eluted nickel may be reduced and uniformly distributed on the surface of the matrix.

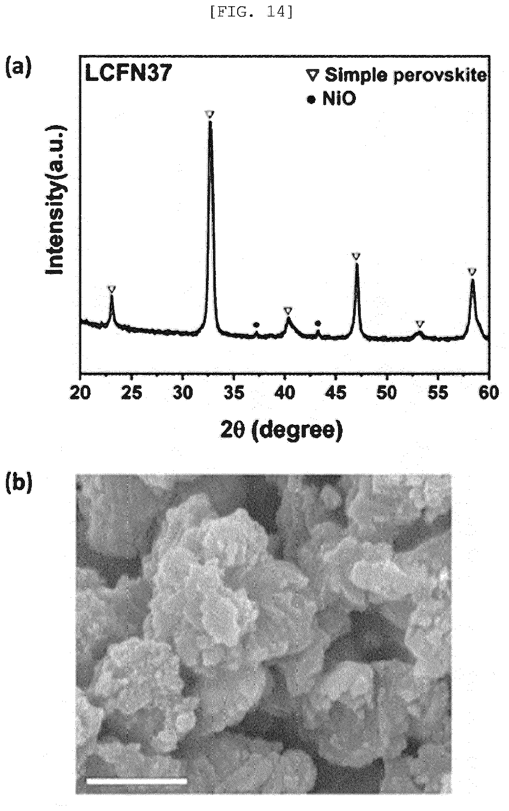

Hereinafter, the result of reforming carbon dioxide gas and methane gas using the dry reforming catalyst body described above will be described. For this reforming, the dry reforming catalyst system shown in FIG. 14 may be used as an example.

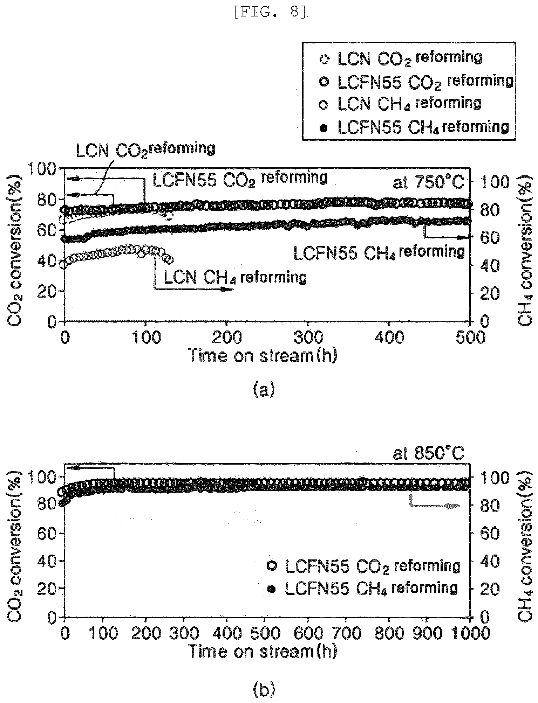

FIG. 8 are graphs showing the reforming results of carbon dioxide gas and methane gas over time using a dry reforming catalyst according to an embodiment of the present invention.

In FIG. 8, (a) is a case where the reforming temperature is 750°C, and (b) is a case where the reforming temperature is 850°C. As the dry reforming catalyst body, the Example is composed of LCFN55 (La_{0.9}Ca_{0.1}Fe_{0.5}Ni_{0.5}O_{3-δ}), and the Comparative Example is composed of LCN (La_{0.9}Ca_{0.1}NiO_{3-δ}) . Note that the Comparative Example does not contain iron (Fe). Measurement conditions were CH₄: CO₂ ratio of 50 cc/min: 50 cc/min, and gas space velocity (GHSV) was 30,000 hr⁻¹.

Referring to (a) of FIG. 8, in the case of the Comparative Example (LCN) at a reforming temperature of 750°C, the reforming performance of carbon dioxide gas and methane gas decreased after about 100 hours. On the other hand, in the case of Example (LCFN55), the reforming performance of carbon dioxide gas and methane gas was maintained for about 500 hours. The reforming performance of carbon dioxide gas at 750°C in the Example ranged from about 70% to about 80% over the entire time, and the reforming performance of methane gas ranged from about 60% to about 70% over the entire time.

Referring to (b) of FIG. 8, in the case of Example (LCFN55) at a reforming temperature of 850°C, the reforming performance of carbon dioxide gas and methane gas was maintained for about 1000 hours. The reforming performance of carbon dioxide gas at 850°C in the Example ranged from about 95% to about 99% over the entire time, and the reforming performance of methane gas ranged from about 90% to about 95% over the entire time. Therefore, the Example can provide excellent high-temperature stability against the reforming of carbon dioxide gas and methane gas even at a relatively high temperature of 850°C.

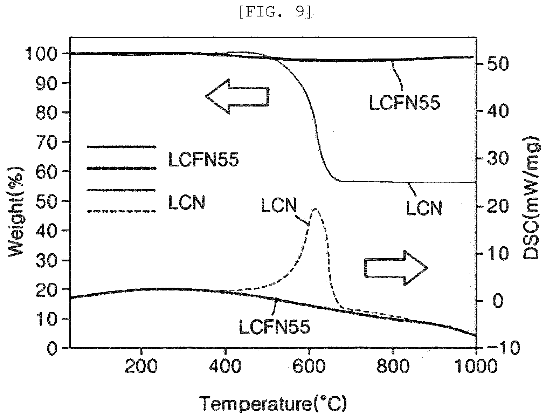

FIG. 9 is a graph showing TGA and DSC results of reforming results of carbon dioxide gas and methane gas over time using a dry reforming catalyst according to an embodiment of the present invention.

Referring to Figure 9, the Comparative Example was composed of LCN (La_{0.9}Ca_{0.1}NiO_{3-δ}) and a process was performed for 130 hours, and the Example was composed of LCFN55 (La_{0.9}Ca_{0.1}Fe_{0.5}Ni_{0.5}O_{3-δ}), and a result was performed for 500 hours.

In the results of TGA (thermogravimetric analysis) and DSC (differential scanning calorimetry), in the case of the Comparative Example, a mass decrease appeared at a temperature in the range of 450°C to 600°C, and a DSC peak appeared along with at the same range. On the other hand, in the case of Example, such mass reduction and DSC peaks did not appear. It is analyzed that the decrease in mass of the Comparative Example is due to the carbon coking phenomenon and the metal agglomeration phenomenon, and accordingly, it is analyzed that the degradation of the reforming performance of FIG. 8 has occurred. On the other hand, in the Example, it is analyzed that the carbon deposition and metal agglomeration do not occur as mass reduction do not occur, and thus the reforming performance may be maintained.

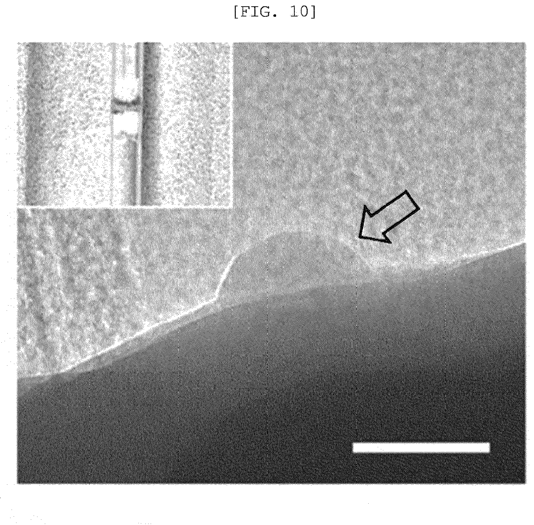

FIG. 10 is a transmission electron microscope photograph after reforming at 850°C for 1000 hours using a dry reforming catalyst according to an embodiment of the present invention.

Referring to FIG. 10, in the Example composed of LCFN55 (La_{0.9}Ca_{0.1}Fe_{0.5}Ni_{0.5}O_{3-δ}), it may be seen that the eluent indicated by an arrow is stably fixed on the surface of the matrix even after being modified at 850°C for 1000 hours. Therefore, in the case of the Example, it is analyzed that high temperature stability is provided in which carbon deposition and metal agglomeration hardly occur even at a high temperature of 850°C.

Hereinafter, the content ratio of iron and nickel in the perovskite crystal structure material constituting the dry reforming catalyst body will be described.

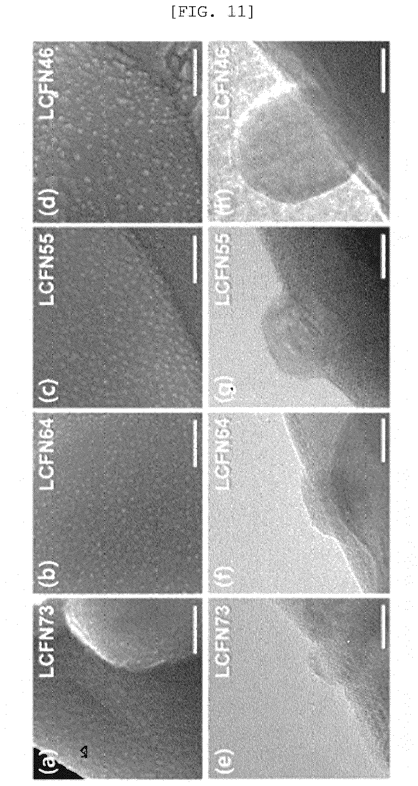

FIG. 11 are scanning electron microscope and transmission electron microscope photographs of a perovskite crystal structure material constituting a dry reforming catalyst according to an embodiment of the present invention.

In FIG. 11, (a), (b), (c), and (d) are scanning electron microscopy photographs, (e), (f), (g), and (h) are transmission electron microscopy photographs. LCFN73 is La_{0.9}Ca_{0.1}Fe_{0.7}Ni_{0.3}O_{3-δ}, LCFN64 is La_{0.9}Ca_{0.1}Fe_{0.6}Ni_{0.4}O_{3-δ}, LCFN55 is La_{0.9}Ca_{0.1}Fe_{0.5}Ni_{0.5}O_{3-δ}, and LCFN46 is La_{0.9}Ca_{0.1}Fe_{0.4}Ni_{0.6}O_{3-δ}.

Referring to FIG. 11, eluates showing a protruding shape were formed in all cases, and the number of eluates was the largest in the case of LCFN55. The size of individual eluates increased in the direction from LCFN73 to LCFN46, which can be seen as the ratio of iron to nickel decreases. This is related to the suppression of the elution of nickel by iron. In this way, considering the number and size of the eluate, the case of LCFN55 is analyzed with the optimized iron and nickel fraction.

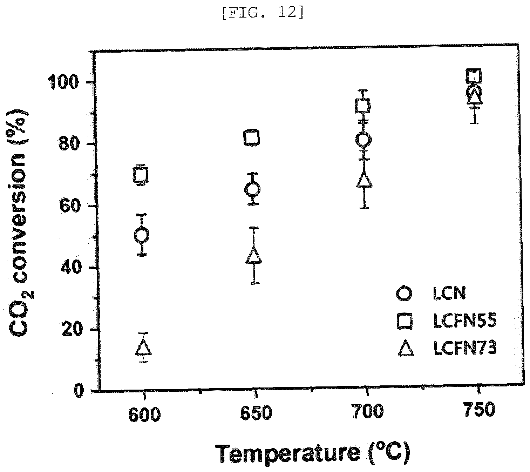

FIG. 12 is a graph showing the result of reforming carbon dioxide gas according to temperature using a dry reforming catalyst according to an embodiment of the present invention.

In FIG. 12, the Comparative Example is composed of LCN (La_{0.9}Ca_{0.1}NiO_{3-δ}), and the Example is composed of LCFN55 (La_{0.9}Ca_{0.1}Fe_{0.5}Ni_{0.5}O_{3-δ}) and LCFN73 (La_{0.9}Ca_{0.1}Fe_{0.7}Ni_{0.3}O_{3-δ}).

Referring to FIG. 12, the LCFN55 showed a high reforming performance of carbon dioxide gas at all temperatures compared to the Comparative Example. On the other hand, compared to the Comparative Example, in LCFN73, the reforming performance of carbon dioxide gas was degraded at a temperature of 650°C or less but slightly decreased or almost the same level at 700°C or higher.

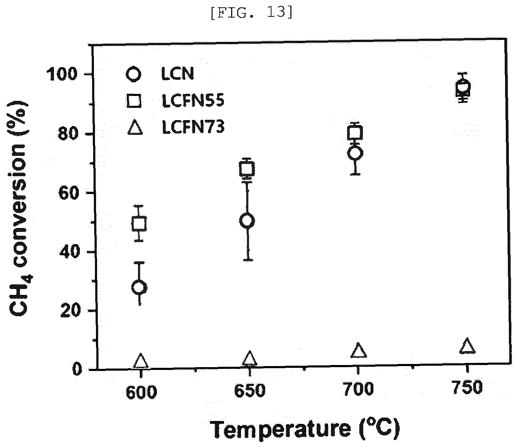

FIG. 13 is a graph showing the results of methane gas reforming according to temperature using a dry reforming catalyst according to an embodiment of the present invention.

In FIG. 13, the Comparative Example is composed of LCN (La_{0.9}Ca_{0.1}NiO_{3-δ}), and the Example is composed of LCFN55 (La_{0.9}Ca_{0.1}Fe_{0.5}Ni_{0.5}O_{3-δ}) and LCFN73 (La_{0.9}Ca_{0.1}Fe_{0.7}Ni_{0.3}O_{3-δ}).

Referring to FIG. 13, the LCFN55 showed a high reforming performance of methane gas at all temperatures compared to the Comparative Example. On the other hand, compared to the Comparative Example, in LCFN73, the reforming performance of methane gas at all temperatures was very low.

According to the results of FIGS. 12 and 13, the optimal material for reforming carbon dioxide gas and reforming methane gas is analyzed as the LCFN55.

FIG. 14 shows the results for the case of LCFN37 in a dry reforming catalyst according to an embodiment of the present invention.

Referring to (a) of FIG. 14, it is a graph showing X-ray diffraction results when the dry reforming catalyst body is LCFN37 (La_{0.9}Ca_{0.1}Fe_{0.3}Ni_{0.7}O_{3-δ}). The LCFN37 was sintered at 950°C for 4 hours. Unlike the result of FIG. 6 of LCFN55, since the peak of nickel oxide (NiO) appears in LCFN37, it can be seen that nickel is not completely inserted into the perovskite structure.

Referring to (b) of FIG. 14, it is a graph showing the scanning electron microscope observation result for the case where the dry reforming catalyst body is LCFN37 (La_{0.9}Ca_{0.1}Fe_{0.3}Ni_{0.7}O_{3-δ}). The LCFN37 was reduced at 750°C for 4 hours, and the size of the scale bar is 500 nm. After reduction treatment, the LCFN37 exhibited a surface morphology that was difficult to explain by elution. Therefore, the LCFN37 is analyzed to be difficult to control the size and number of eluates mainly composed of nickel.

### Application Example: dry reforming catalyst system

Hereinafter, a dry reforming catalyst system will be described as an Application Example to which the dry reforming catalyst body according to an embodiment of the present invention is applied. The following dry reforming catalyst system is an exemplary application example, and the technical spirit of the present invention is not limited thereto. The dry reforming catalyst body may be applied as various types of dry reforming catalyst systems.

A dry reforming catalyst system, according to an embodiment of the present invention, includes a dry reforming catalyst body for reforming a gas to be reformed, in which the dry reforming catalyst body includes: a matrix composed of a perovskite crystal structure material comprising a first transition element and a second transition element; and an eluate in which the first transition element is eluted from the matrix to the surface. The perovskite crystal structure material may include any one of the compounds of Formulae 1 to 7 above. The gas to be reformed may include hydrocarbon gas such as methane gas, carbon dioxide gas, or both. By the reforming, hydrocarbon gas, carbon dioxide gas, or both may be changed into, for example, hydrogen and carbon monoxide.

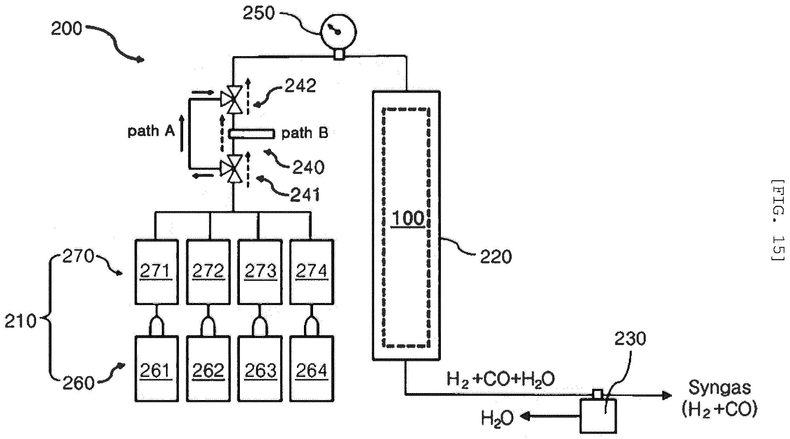

FIG. 15 is a schematic diagram showing a dry reforming catalyst system 200 according to an embodiment of the present invention.

Referring to FIG. 15, a case in which the dry reforming catalyst system 200 includes one of gas reforming reactor 220 is shown.

The dry reforming catalyst system 200 includes a gas supply unit 210 supplying a target gas to be reformed and a gas reforming reaction unit 220 performing a reaction of reforming the target gas to be reformed supplied from the gas supply unit 210. In addition, the dry reforming catalyst system 200 may further include at least one of water vapor condensing unit 230, a bubbler 240, and a pressure measuring unit 250.

The gas supply unit 210 may include a gas accommodating unit 260 and a gas mass flow controlling unit 270.

The gas accommodating unit 260 may accommodate a reforming target gas to be reformed, a carrier gas, and a reducing gas. The gas to be reformed may include carbon dioxide gas, hydrocarbon gas, or both. The carrier gas may include helium gas, argon gas, nitrogen gas, or both. The reducing gas may include hydrogen gas, ammonia gas, or both. The gas accommodating unit 260 may include, for example, first to fourth gas accommodating units 261, 262, 263, and 264. The first gas accommodating unit 261 may include carbon dioxide gas as the target gas to be reformed. The second gas accommodating unit 262 may include hydrocarbon gas, for example, methane gas as the target gas to be reformed. The third gas accommodating unit 263 may include helium gas as the carrier gas. The fourth gas container 264 may include hydrogen gas as the reducing gas. The carrier gas may perform a function of facilitating the supply of the gas to be reformed. The reducing gas may be required when a reduction process is required and may not be supplied when a reduction process is not required.

A gas mass flow controller 270 may control the mass flow of gas included in the gas accommodating unit 260. The gas mass flow controller 270 may include first to fourth gas mass flow controllers 271, 272, 273, and 274 individually connected to the first to fourth gas accommodating units 261, 262, 263, and 264, respectively.

The gas reforming reaction unit 220 may reform the gas to be reformed, such as carbon dioxide gas or methane gas, and may convert those gases into hydrogen gas and carbon monoxide gas. The gas reforming reaction unit 220 may include the dry reforming catalyst body 100 that reforms the target gas to be reformed. The dry reforming catalyst body 100 may include: a matrix composed of a perovskite crystal structure material comprising a first transition element and a second transition element; and an eluate in which the first transition element is eluted from the matrix to the surface. The shape, number, and arrangement of the dry reforming catalyst body 100 may be made in various ways.

The gas reforming reaction unit 220 may have various dimensions, for example, an inner diameter in a range of 0.01 to 0.5 m, for example, an inner diameter of 0.1 m, and a length in a range of 1 to 15 m, for example, a length of 10 m. The gas reforming reaction unit 220 may be maintained at a temperature of, for example, 700°C to 900°C and may be maintained at a temperature of, for example, 850°C.

The water vapor condensing unit 230 is disposed at the output unit of the gas reforming reaction unit 220 and may condense the water vapor included in the product after the reforming target gas is reformed to form a liquid phase and remove the water vapor. Accordingly, dried syngas (e.g., hydrogen gas and carbon monoxide gas) may be formed.

The bubbler 240 may be disposed between the gas supply unit 210 and the gas reforming reaction unit 220. The bubbler 240 may be used when performing a reduction reaction using a reducing gas such as hydrogen gas. The bubbler 240 is optional and may be omitted. In order to control the gas flow to the bubbler 240, an input 3-way valve 241 on the input side and an output 3-way valve 242 on the output side may be disposed.

The pressure measuring unit 250 may be disposed between the gas supply unit 210 and the gas reforming reaction unit 220. The pressure measuring unit 250 may measure the gas pressure for measuring the pressure provided to the gas reforming reaction unit 220, and may measure the entire gas pressure including, for example, the target gas to be reformed, the carrier gas, and the reducing gas. The target pressure range may be 0.5 MPa to 1 MPa. In the pressure measuring unit 250, when the pressure of the entire gas is out of the target pressure range, the gas supply unit 210 may be controlled to control the pressure within the target pressure range.

Hereinafter, gas flow in the dry reforming catalyst system 200 will be described.

First, the target gas to be reformed is supplied from the gas supply unit 210. Specifically, carbon dioxide gas is supplied through the first gas accommodating unit 261 and the first gas mass flow controller 271. A hydrocarbon gas, for example, methane gas is supplied through the second gas accommodating unit 262 and the second gas mass flow controller 272. If necessary, a carrier gas, for example, helium gas is supplied through the third gas accommodating unit 263 and the third gas mass flow controller 273. In the case of performing the reduction reaction, a reducing gas, for example, hydrogen gas is supplied through the fourth gas accommodating unit 264 and the fourth gas mass flow controller 274. The gases supplied from the gas supply unit 210 may be mixed to form a mixed gas.

When the reduction reaction is not performed, the mixed gas flows along the path A indicated by the solid line. In this case, the input 3-way valve 241 and the output 3-way valve 242 form a path to block the flow of the mixed gas to the bubbler 240. On the other hand, in the case of performing the reduction reaction, the mixed gas flows through the bubbler 240 along the path B indicated by the dotted line. The input 3-way valve 241 and the output 3-way valve 242 form a path to allow the flow of the mixed gas to the bubbler 240 and block the flow of the mixed gas to the path A.

The total pressure of the mixed gas is measured by the pressure measuring unit 250 and may be controlled in conjunction with the gas supply unit 210.

The mixed gas is supplied to the gas reforming reaction unit 220 and reformed by the dry reforming catalyst body 100, thereby forming a syngas of hydrogen gas and carbon monoxide gas.

While the syngas formed by the gas reforming reaction unit 220 passes through the water vapor condensing unit 230, the water vapor is condensed to change into a liquid phase and can be removed, thereby forming the dried syngas.

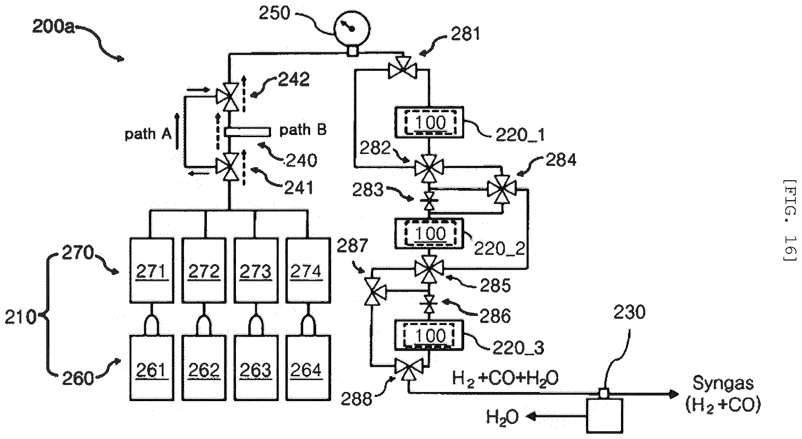

FIG. 16 is a schematic diagram showing a dry reforming catalyst system 200a according to an embodiment of the present invention.

Referring to FIG. 16, the case where the dry reforming catalyst system 200 includes a plurality of gas reforming reaction units 220 is illustrated, and the case including three gas reforming reaction units 220 is illustrated. Specifically, the gas reforming reaction unit 220 includes a plurality of gas reforming reaction units 220, each of which includes one or more valves 281 to 288 forming a path through which the target gas to be reformed passes or is blocked in each of the gas reforming reaction unit 220.

The dry reforming catalyst system 200a includes a gas supply unit 210 supplying a target gas to be reformed and a plurality of gas reforming reaction unit 220 for reforming the gas to be reformed supplied from the gas supply unit 210. In addition, the dry reforming catalyst system 200 may further include valves 281 to 288 that open or block gas flow paths to the plurality of gas reforming reactors 220. In addition, the dry reforming catalyst system 200 may further include at least one of a water vapor condensing unit 230, a bubbler 240, and a pressure measuring unit 250.

Compared to the dry reforming catalyst system 200 of the embodiment of FIG. 15 described above, the dry reforming catalyst system 200a includes a plurality of gas reforming reactors 220 and further includes valves 281 to 288. Therefore, descriptions of components overlapping those of the above-described embodiment will be omitted.

The gas reforming reaction unit 220 is composed of a plurality of gas reforming reaction units 220 and may include, for example, a first gas reforming reaction unit 220_1, a second gas reforming reaction unit 220_2, and a third gas reforming reaction unit 220_3. However, this is exemplary, and a case in which the gas reforming reaction unit 220 is configured in a different number is also included in the technical spirit of the present invention.

The first gas reforming reaction unit 220_1, the second gas reforming reaction unit 220_2, and the third gas reforming reaction unit 220_3 may reform the target gas to be reformed such as carbon dioxide gas or methane gas to convert the target gas into hydrogen gas and carbon monoxide gas. The first gas reforming reaction unit 220_1, the second gas reforming reaction unit 220_2, and the third gas reforming reaction unit 220_3 may each include a dry reforming catalyst body 100 that reforms the above-mentioned target gas to be reformed.

Each of the first gas reforming reaction unit 220_1, the second gas reforming reaction unit 220_2, and the third gas reforming reaction unit 220_3 may have various dimensions, for example, an inner diameter in a range of 0.01 to 0.5 m, for example, an inner diameter of 0.1 m, and a length in a range of 1 to 10 m, for example, a length of 5 m. Each of the first gas reforming reaction unit 220_1, the second gas reforming reaction unit 220_2, and the third gas reforming reaction unit 220_3 may be maintained at a temperature of, for example, 700°C to 900°C, for example, may be maintained at a temperature of 850°C.

The valves 281 to 288 may open or block gas flow paths to the first gas reforming reaction unit 220_1, the second gas reforming reaction unit 220_2, and the third gas reforming reaction unit 220_3.

The first valve 281 may be disposed in a gas path toward the first gas reforming reaction unit 220_1 and may open or block a gas flow path to the first gas reforming reaction unit 220_1. The first valve 281 may be configured as a 3-way valve.

The second valve 282, the third valve 283, and the fourth valve 284 may be disposed in a gas path between the first gas reforming reaction unit 220_1 and the second gas reforming reaction unit 220_2 and may open or block a gas flow path to the second gas reforming reaction unit 220_2. The second valve 282 may be configured as a 4-way valve, the third valve 283 may be configured as a 2-way valve, and the fourth valve 284 may be configured as a 4-way valve.

The fifth valve 285, the sixth valve 286, and the seventh valve 287 may be disposed in a gas path between the second gas reforming reaction unit 220_2 and the third gas reforming reaction unit 220_3 and may open or block a gas flow path to the third gas reforming reaction unit 220_3. The fifth valve 285 may be configured as a 4-way valve, the sixth valve 286 may be configured as a 2-way valve, and the seventh valve 287 may be configured as a 3-way valve.

The eighth valve 288 may be disposed in a flow path of gas discharged from the third gas reforming reaction unit 220_3 and may provide a path for the gas discharged from the second gas reforming reaction unit 220_2 or the third gas reforming reaction unit 220_3 to flow to the water vapor condensing unit 230 or to the outside. The eighth valve 288 may be configured as a 3-way valve.

The gas flow in the dry reforming catalyst system 200a may generally be the same as the gas flow in the dry reforming catalyst system 200 described above, but the flow of the target gas to be reformed in the plurality of gas reforming reaction units 220 is different. Therefore, hereinafter, the flow of the target gas to be reformed in the plurality of gas reforming reaction units 220 will be described.

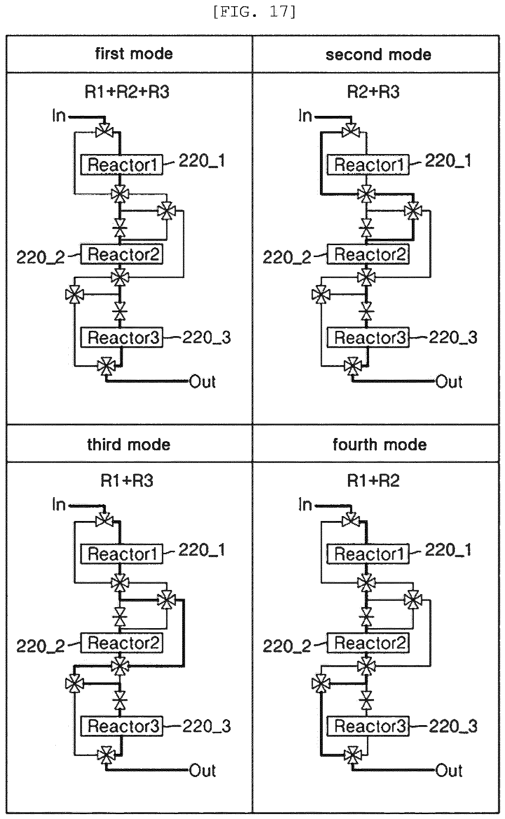

FIG. 17 is a diagram explaining the flow of a target gas to be reformed in a plurality of gas reforming reaction units in the dry reforming catalyst system 200a according to an embodiment of the present invention.

Referring to FIGS. 16 and 17, the flow of the target gas to be reformed in the plurality of gas reforming reaction units may be exemplarily implemented in first to fourth modes. In each mode, the flow path of the target gas to be reformed is indicated in yellow.

In the first mode, the target gas to be reformed may flow in a path passing through the first gas reforming reaction unit 220_1, the second gas reforming reaction unit 220_2, and the third gas reforming reaction unit 220_3. To this end, the target gas to be reformed may sequentially flow through the first valve 281, the second valve 282, the third valve 283, the fifth valve 285, the sixth valve 286, and the eighth valve 288. The first valve 281 is a 3-way valve and may form a gas flow path so that the target gas to be reformed passes through the first gas reforming reaction unit 220_1.

In the second mode, the target gas to be reformed may flow in a path passing through the second gas reforming reaction unit 220_2 and the third gas reforming reaction unit 220_3 without passing through the first gas reforming reaction unit 220_1. To this end, the target gas to be reformed may sequentially flow through the first valve 281, the second valve 282, the fourth valve 284, the third valve 283, the fifth valve 285, the sixth valve 286, and the eighth valve 288. The first valve 281 is a 3-way valve and may form a gas flow path so that the target gas to be reformed does not pass through the first gas reforming reaction unit 220_1.

In the third mode, the target gas to be reformed may flow in a path passing through the first gas reforming reaction unit 220_1 and the third gas reforming reaction unit 220_3 without passing through the second gas reforming reaction unit 220_2. To this end, the target gas to be reformed may sequentially flow through the first valve 281, the second valve 282, the fourth valve 284, the fifth valve 285, the seventh valve 287, the sixth valve 286, and the eighth valve 288. The first valve 281 is a 3-way valve and may form a gas flow path so that the target gas to be reformed passes through the first gas reforming reaction unit 220_1. The third valve 283 is a 2-way valve and may block a gas flow path so that the target gas to be reformed does not pass through the second gas reforming reaction unit 220_2. The seventh valve 287 is a 3-way valve and may form a gas flow path so that the target gas to be reformed passes through the third gas reforming reaction unit 220_3.

In the fourth mode, the target gas to be reformed may flow in a path passing through the first gas reforming reaction unit 220_1 and the second gas reforming reaction unit 220_2 without passing through the third gas reforming reaction unit 220_3. To this end, the target gas to be reformed may sequentially flow through the first valve 281, the second valve 282, the third valve 283, the fifth valve 285, the seventh valve 287, and the eighth valve 288. The first valve 281 is a 3-way valve and may form a flow path so that the target gas to be reformed passes through the first gas reforming reaction unit 220_1. The sixth valve 286 is a 2-way valve, and may block a gas flow path so that the target gas to be reformed does not pass through the third gas reforming reaction unit 220_3. The seventh valve 287 is a 3-way valve and may form a gas flow path so that the target gas to be reformed passes through the third gas reforming reaction unit 220_3.

### Application Example: Solid oxide fuel cell

Hereinafter, a solid oxide fuel cell will be described as an application example to which the dry reforming catalyst body according to an embodiment of the present invention is applied. The solid oxide fuel cell described below is an exemplary application example, and the technical spirit of the present invention is not limited thereto.

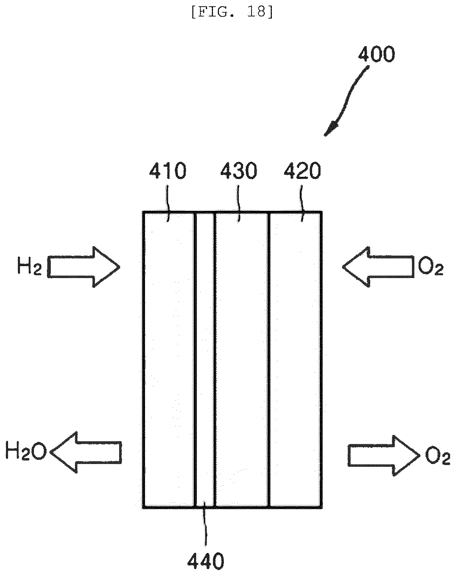

FIG. 18 is a schematic view explaining a solid oxide fuel cell 400 including a dry reforming catalyst body, according to an embodiment of the present invention.

Referring to FIG. 18, the solid oxide fuel cell 400 includes an anode 410, a cathode 420 disposed facing the anode 410, and an electrolyte 430, that is an oxygen ion conductivity solid oxide disposed between the anode 410 and the cathode 420. Optionally, a buffer layer 440 disposed between the anode 410 and the electrolyte 430 may be further included.

As shown in the following Formula, the electrochemical reaction of the solid oxide fuel cell 400 includes the cathode reaction in which oxygen gas O² of the cathode 420 is converted into oxygen ion O²- and an anode reaction electrolyte in which the fuel (H₂ or hydrocarbon) of the anode (410) reacts with oxygen ions that have moved through the electrolyte.
<Formula>

Cathode reaction: 1/2 O₂ + 2e⁻ -> O²⁻

Anode reaction: H₂ + O²⁻ -> H₂O + 2e⁻

In the cathode 420 of the solid oxide fuel cell 400, oxygen adsorbed on the electrode surface moves to the triple phase boundary where an electrolyte 430, a cathode 420, and pores (not shown) meet through dissociation and surface diffusion to obtain electrons to become oxygen ions, and the generated oxygen ions move to the anode 410, which is the fuel electrode, through the electrolyte 430.

In the anode 410 of the solid oxide fuel cell 400, the moved oxygen ions combine with hydrogen contained in the fuel to generate water. At this time, hydrogen discharges electrons and converts hydrogen into hydrogen ions (H⁺), and combines hydrogen ions with the oxygen ions. The discharged electrons move to the cathode 420 through a wire (not shown) and convert oxygen into oxygen ions. Through this movement of electrons, the solid oxide fuel cell 400 can perform a battery function.

Since the solid oxide fuel cell 400 may be manufactured using a conventional method known in various literatures in the art, a detailed description thereof will be omitted here. In addition, the solid oxide fuel cell 400 may be applied to various structures, such as a tubular type stack, a flat tubular type stack, and a planar type stack.

The solid oxide fuel cell 400 may be in the form of a stack of unit cells. For example, a stack of unit cells may be obtained by stacking unit cells (membrane and electrode assembly, MEA) composed of an anode 410, a cathode 420, and an electrolyte 430 in series and interposing a separator electrically connecting them between the unit cells.

The anode 410 may include a dry reforming catalyst body according to the technical concept of the present invention. The dry reforming catalyst body may include: a matrix composed of a perovskite crystal structure material comprising a first transition element and a second transition element; and an eluate in which the first transition element is eluted from the matrix to the surface. Accordingly, the anode 410, which is the anode, may form a desired hydrogen-containing raw material by reforming carbon dioxide with the dry reforming catalyst body.

The cathode 420 is not particularly limited, and a known cathode may be used. The cathode 420 may include, for example, LaSrFe-YSZ and may include, for example, La_{0.8}Sr_{0.2}Fe-YSZ. The cathode 420 may include, for example, NBSCF-40GDC (NdBa_{0.5}Sr_{0.5}Co_{1.5}Fe_{0.5}O_{5+δ-}Ce_{0.9}Gd_{0.1}O_{1.95}). In addition, the case where the cathode 420 is formed using an electrode material according to the technical concept of the present invention is also included in the technical concept of the present invention.

The electrolyte 430 is not particularly limited as long as the electrolyte is generally usable in the art. For example, the electrolyte 430 may include: stabilized zirconia series such as yttria stabilized zirconia (YSZ) and scandia stabilized zirconia (ScSZ); ceria series added with rare earth elements such as samaria doped ceria (SDC), gadolinia doped ceria (GDC), etc.; other LSGM ((La, Sr) (Ga, Mg)O₃) based; etc. Also, the electrolyte 430 may include lanthanum gallate doped with strontium or magnesium.

The buffer layer 440 may be positioned between the anode 410 and the electrolyte 430 to perform the function of providing smooth contact. The buffer layer 440 may perform, for example, a function of mitigating the crystal lattice distortion between the anode 410 and the electrolyte 430. The buffer layer 440 may include, for example, LDC (La_{0.4}Ce_{0.6}O_{1-δ}). The buffer layer 440 may be omitted as an optional component.

It will be apparent to those skilled in the art that the technical concept of the present invention is not limited to the above-described embodiments and accompanying drawings and can be replaced, modified, and changed without departing from the technical idea of the present invention.

### Industrial Applicability

Using the present invention, a dry reforming catalyst body can be manufactured.

## Claims

1. A dry reforming catalyst body comprising:
a matrix composed of a perovskite crystal structure material comprising a first transition element and a second transition element; and
an eluate comprising the first transition element eluted from the matrix to a surface.

2. The dry reforming catalyst body of claim 1, wherein the second transition element suppresses elution of the first transition element to reduce the size of the eluate.

3. The dry reforming catalyst body of claim 1, wherein the eluate has a size in a range of 5 to 10 nm.

4. The dry reforming catalyst body of claim 1, wherein each of the first transition element and the second transition element comprises cobalt (Co), nickel (Ni), iron (Fe), copper (Cu), manganese (Mn), ruthenium (Ru), rhodium (Rh), palladium (Pd), iridium (Ir), platinum (Pt), gold (Au), silver (Ag), or a mixture thereof.

5. The dry reforming catalyst body of claim 1, wherein the perovskite crystal structure material comprises a compound represented by Formula 1 below,
<Formula 1> RₐE_{b}T'ₓT₁₋ₓO_{3-δ}
In Formula 1, the R may comprise one or more elements selected from the lanthanide group, the E may comprise one or more elements selected from an alkaline earth metal group, and the T and T' are different elements selected from transition elements and are the first transition element and the second transition element, respectively, the O is oxygen, and each of a and b is each a numerical value greater than 0 and less than 1 and satisfying a + b = 1, the x is a numerical value greater than 0 and less than 1, and the δ is 0 or a positive numerical value that is equal to or less than 1 and is a value that makes the compound of Formula 1 electrically neutral.

6. The dry reforming catalyst body of claim 1, wherein the perovskite crystal structure material comprises a compound represented by Formula 2 below,
<Formula 2> RₐE_{b}FeₓT₁₋ₓO_{3-δ}
In Formula 2, the R may comprise one or more elements selected from the lanthanide group, the E may comprise one or more elements selected from an alkaline earth metal group, the T is the first transition element selected from a transition element excluding iron (Fe), the Fe is the second transition element, the O is oxygen, each of a and b is each a numerical value greater than 0 and less than 1 and satisfying a + b = 1, the x is a numerical value greater than 0 and less than 1, and the δ is 0 or a positive numerical value that is equal to or less than 1 and is a value that makes the compound of Formula 1 electrically neutral.

7. The dry reforming catalyst body of claim 1, wherein the perovskite crystal structure material comprises a compound represented by Formula 3 below,
<Formula 3> LaₐCa_{b}FeₓT₁₋ₓO_{3-δ}
In Formula 3, the T is the first transition element selected from a transition element excluding iron (Fe), the Fe is the second transition element, the O is oxygen, each of a and b is each a numerical value greater than 0 and less than 1 and satisfying a + b = 1, the x is a numerical value greater than 0 and less than 1, and the δ is 0 or a positive numerical value that is equal to or less than 1 and is a value that makes the compound of Formula 1 electrically neutral, and the T may comprise cobalt (Co), nickel (Ni), copper (Cu), manganese (Mn), ruthenium (Ru), rhodium (Rh), palladium (Pd), iridium (Ir), platinum (Pt), gold (Au), silver (Ag), or a mixture thereof.

8. The dry reforming catalyst body of claim 1, wherein the perovskite crystal structure material comprises a compound represented by Formula 4 below,
<Formula 4> LaₐCa_{b}FeₓNi₁₋ₓO_{3-δ}
In Formula 4, the O is oxygen, each of a and b is each a numerical value greater than 0 and less than 1 and satisfying a + b = 1, the Fe is the second transition element, the Ni is the first transition element, the x is a numerical value greater than 0 and less than 1, and the δ is 0 or a positive numerical value that is equal to or less than 1 and is a value that makes the compound of Formula 4 electrically neutral.

9. The dry reforming catalyst body of claim 1, wherein the perovskite crystal structure material comprises a compound represented by Formula 5 below,
<Formula 5> La_{0.9}Ca_{0.1}Fe_{0.5}T_{0.5}O_{3-δ}
In Formula 5, the T is the first transition element selected from a transition element excluding iron (Fe), the Fe is the second transition element, the O is oxygen, the δ is 0 or a positive numerical value that is equal to or less than 1 and is a value that makes the compound of Formula 5 electrically neutral, and the T may comprise cobalt (Co), nickel (Ni), copper (Cu), manganese (Mn), ruthenium (Ru), rhodium (Rh), palladium (Pd), iridium (Ir), platinum (Pt), gold (Au), silver (Ag), or a mixture thereof.

10. The dry reforming catalyst body of claim 1, wherein the perovskite crystal structure material comprises La_{0.9}Ca_{0.1}Fe_{0.5}Co_{0.5}O_{3-δ}, La_{0.9}Ca_{0.1}Fe_{0.5}Ni_{0.5}O_{3-δ}, La_{0.9}Ca_{0.1}Fe_{0.5}Cu_{0.5}O_{3-δ}, La_{0.9}Ca_{0.1}Fe_{0.s}Mn_{0.5}O_{3-δ}, La_{0.9}Ca_{0.1}Fe_{0.5}Ru_{0.5}O_{3-δ}, La_{0.9}Ca_{0.1}Fe_{0.5}Rh_{0.5}O_{3-δ}, La_{0.9}Ca_{0.1}Fe_{0.5}Pd_{0.5}O_{3-δ}, La_{0.9}Ca_{0.1}Fe_{0.5}Ir_{0.5}O_{3-δ}, La_{0.9}Ca_{0.1}Fe_{0.5}Pt_{0.5}O_{3-δ}, La_{0.9}Ca_{0.1}Fe_{0.5}Au_{0.5}O_{3-δ}, La_{0.9}Ca_{0.1}Fe_{0.5}Ag_{0.5}O_{3-δ}, or a mixture thereof.

11. The dry reforming catalyst body of claim 1, wherein the perovskite crystal structure material comprises a compound represented by Formula 6 below,
<Formula 6> La_{0.9}Ca_{0.1}FeₓNi₁₋ₓO_{3-δ}
In Formula 6, the O is oxygen, the Fe is the second transition element, the Ni is the first transition element, the x is a numerical value greater than 0.3 and less than 0.7, and the δ is 0 or a positive numerical value that is equal to or less than 1 and is a value that makes the compound of Formula 6 electrically neutral.

12. The dry reforming catalyst body of claim 1, wherein the perovskite crystal structure material comprises La_{0.9}Ca_{0.1}Fe_{0.3}Ni_{0.7}O_{3-δ}, La_{0.9}Ca_{0.1}Fe_{0.35}Ni_{0.65}O_{3-δ}, La_{0.9}Ca_{0.1}Fe_{0.4}Ni_{0.5}O_{3-δ}, La_{0.9}Ca_{0.1}Fe_{0.45}Ni_{0.55}O_{3-δ}, La_{0.9}Ca_{0.1}Fe_{0.5}Ni_{0.5}O_{3-δ}, La_{0.9}Ca_{0.1}Fe_{0.55}Ni_{0.45}O_{3-δ}, La_{0.9}Ca_{0.1}Fe_{0.6}Ni_{0.4}O_{3-δ}, La_{0.9}Ca_{0.1}Fe_{0.65}Ni_{0.35}O_{3-δ}, La_{0.9}Ca_{0.1}Fe_{0.7}Ni_{0.3}O_{3-δ}, or a mixture thereof.

13. The dry reforming catalyst body of claim 1, wherein the perovskite crystal structure material is La_{0.9}Ca_{0.1}Fe_{0.5}Ni_{0.5}O_{3-δ}, the first transition element is nickel (Ni), the second transition element is iron (Fe), the eluate comprises nickel, and the iron suppresses elution of the nickel, thereby reducing the size of the eluate so that the eluate comprising nickel has a size in a range of 5 to 10 nm.

14. A dry reforming catalyst body comprising:
a matrix composed of a perovskite crystal structure material comprising a first transition element, a second transition element; and a third transition element; and
an eluate comprising the first transition element, the third transition element, or both of the first and third transition elements eluted from an inside to a surface of the matrix,
wherein the perovskite crystal structure material comprises a compound represented by Formula 7 below.
<Formula 7> RₐE_{b}T'ₓT_{1-(x+y)}T"_{y}O_{3-δ}
In Formula 1, the R may comprise one or more elements selected from the lanthanide group, the E may comprise one or more elements selected from an alkaline earth metal group, the T, T', and T" are different elements selected from transition elements and are the first transition element, the second transition element, and the third transition element, respectively, the O is oxygen, each of the a and b is each a numerical value greater than 0 and less than 1 and satisfying a + b = 1, each of the x and the y is a numerical value greater than 0 and less than 1 and satisfying x + y = 1, and the δ is 0 or a positive numerical value that is equal to or less than 1 and is a value that makes the compound of Formula 7 electrically neutral.

15. A method of manufacturing a dry reforming catalyst body, the method comprising:
forming a matrix composed of a perovskite crystal structure material comprising a first transition element and a second transition element; and
heat-treating the matrix in a reducing gas atmosphere to form an eluate comprising the first transition element eluted from an inside to a surface of the matrix,
wherein a size of the eluate is controlled by a temperature range in which the heat treatment is performed.

16. The method of claim 15, wherein the perovskite crystal structure material comprises a compound represented by Formula 6 below.
<Formula 6> La_{0.9}Ca_{0.1}FeₓNi₁₋ₓO_{3-δ}
In Formula 6, the O is oxygen, the Fe is the second transition element, the Ni is the first transition element, the x is a numerical value in a range of from greater than 0.3 and less than 0.7, and the δ is 0 or a positive numerical value that is equal to or less than 1 and is a value that makes the compound of Formula 6 electrically neutral.

17. The method of claim 15, wherein the forming of the eluate is performed in a temperature range of 700°C to 750°C.

18. The method of claim 15, wherein the reducing gas comprises at least one selected from among hydrogen gas, ammonia gas, carbon monoxide gas, methane gas, and propane gas.

19. The method of claim 15, wherein the forming of the matrix comprises:
mixing a solvent with metal precursors weighed to suit a composition of the perovskite crystal structure material;
forming a solid from the mixture of the solvent and the metal precursors through a spontaneous combustion process;
calcining the solid in air to form a calcined product; and
pulverizing the calcined product to form the matrix.

20. A dry reforming catalyst system comprising:
a dry reforming catalyst body used to reform a target gas to be reformed, wherein the dry reforming catalyst body comprises:
a matrix composed of a perovskite crystal structure material comprising a first transition element and a second transition element; and
an eluate comprising the first transition element eluted from an inside to a surface of the matrix,
wherein the perovskite crystal structure material comprises a compound of represented by Formula 1.
<Formula 1> RₐE_{b}T'_{X}T₁₋ₓO_{3-δ}
In Formula 1, the R may comprise one or more elements selected from the lanthanide group, the E may comprise one or more elements selected from an alkaline earth metal group, and the T and T' are different elements selected from transition elements and are the first transition element and the second transition element, respectively, the O is oxygen, and each of the a and b is each a numerical value greater than 0 and less than 1 and satisfying a + b = 1, the x is a numerical value greater than 0 and less than 1, and the δ is 0 or a positive numerical value equal to or less than 1 and is a value that makes the compound of Formula 1 electrically neutral.

21. A dry reforming catalyst system comprising:
a gas supply unit supplying a target gas to be reformed; and
a gas reforming reaction unit configured to reform the target gas supplied from the gas supply unit,
wherein the gas reforming reaction unit comprises
a dry reforming catalyst body that reforms the target gas, the dry reforming catalyst body comprising
a matrix and an eluate, the matrix being composed of a perovskite crystal structure material comprising a first transition element and a second transition element, the eluate comprising the first transition element eluted from an inside to a surface of the matrix.

22. The system of claim 21, wherein the gas supply unit comprises:
a gas accommodating unit accommodating the target gas; and
a gas mass flow controller controlling a mass flow of the target gas.

23. The system of claim 22, wherein the gas accommodating unit accommodates a carrier gas, a reducing gas, or both, and
the gas mass flow controller individually controls the carrier gas, the reducing gas, or both of them.

24. The system of claim 21, further comprising:
a bubbler disposed between the gas supply unit and the gas reforming reaction unit; and
an input 3-way valve and an output 3-way valve that are configured to control gas flow to the bubbler.

25. The system of claim 21, further comprising a pressure measuring unit disposed between the gas supply unit and the gas reforming reaction unit and configured to a pressure of a gas supplied the gas reforming reaction unit.

26. The system of claim 21, further comprising a water vapor condensing unit disposed in an output unit of the gas reforming reaction unit and configured to condense and remove water vapor formed from the reformed target gas.

27. The system of claim 21, wherein the gas reforming reaction unit comprises a plurality of gas reforming reaction units, and each of the gas reforming reaction units comprises one or more valves for opening or blocking a gas flow path through which the target gas flows.

28. The system of claim 27, wherein the gas reforming reaction unit comprises:
a first valve comprising first to third gas reforming reaction units, disposed in a gas flow path to the first gas reforming reaction unit, and
opening or blocking a gas flow path to the first gas reforming reaction unit;
second to fourth valves disposed between the first gas reforming reaction unit and the second gas reforming reaction unit, and configured to open or block a gas flow path to the second gas reforming reaction unit;
fifth to seventh valves disposed between the second gas reforming reaction unit and the third gas reforming reaction unit, and configured to open or block a gas flow path to the third gas reforming reaction unit; and
an eighth valve disposed in a gas flow path through which the gas is discharged from the third gas reforming reaction unit.

29. The system of claim 28, wherein the first valve is a 3-way valve, the second valve is a 4-way valve, the third valve is a 2-way valve, the fourth valve is a 4-way valve, the fifth valve is a 4-way valve, the sixth valve is a 2-way valve, the seventh valve is a 3-way valve, and the eighth valve is a 3-way valve.

30. A solid oxide fuel cell comprising:
an anode;
a cathode disposed facing the anode; and
an electrolyte disposed between the anode and the cathode,
wherein the anode comprises:
a matrix composed of a perovskite crystal structure material comprising a first transition element and a second transition element; and
an eluate comprising the first transition element eluted from an inside to a surface of the matrix.
